(19) Europäisches Patentamt / European Patent Office / Office européen des brevets

(11) **EP 4 453 605 B1**

(12) **FASCICULE DE BREVET EUROPEEN**

(45) Date de publication et mention
de la délivrance du brevet:
**01.07.2026 Bulletin 2026/27**

(21) Numéro de dépôt: **22835825.5**

(22) Date de dépôt: **16.12.2022**

(51) Classification Internationale des Brevets (IPC):
**G01S 7/487** *(2006.01)*    **G01S 17/10** *(2020.01)*
**G01S 17/894** *(2020.01)*

(52) Classification Coopérative des Brevets (CPC):
**G01S 7/487; G01S 17/10; G01S 17/894**

(86) Numéro de dépôt international:
**PCT/EP2022/086416**

(87) Numéro de publication internationale:
**WO 2023/117778 (29.06.2023 Gazette 2023/26)**

(54) **LIDAR STATIQUE À GRAND CHAMP DE VUE**

STATISCHER LIDAR MIT BREITEM SICHTFELD

WIDE-FIELD-OF-VIEW STATIC LIDAR

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **21.12.2021 FR 2114182**

(43) Date de publication de la demande:
**30.10.2024 Bulletin 2024/44**

(73) Titulaires:
• **Centre National de la Recherche Scientifique
75016 Paris (FR)**
• **Université Paris-Saclay
91190 Gif-sur-Yvette (FR)**

(72) Inventeur: **CROMIERES, Jean-Paul
91405 ORSAY (FR)**

(74) Mandataire: **IPAZ
Parc Les Algorithmes
Bâtiment Platon
91190 Saint Aubin (FR)**

(56) Documents cités:
**WO-A1-2013/120041    US-A1- 2013 088 726**

• **C E PARRISH ET AL: "Empirical comparison of
full-waveform lidar algorithms: Range extraction
and discrimination performance",
PHOTOGRAMMETRIC ENGINEERING AND
REMOTE SENSING, vol. 77, no. 8, 1 August 2011
(2011-08-01), pages 825 - 838, XP055049568,
ISSN: 0099-1112, DOI: 10.14358/PERS.77.8.825**

**Description**

**DOMAINE DE L'INVENTION**

La présente invention concerne le domaine des lidars réalisant une mesure par temps de vol (« time of fligth » en anglais ou TOF), et plus particulièrement des lidars présentant un champ de vue supérieur à 5°. On s'intéresse ici aux lidars statiques (sans pièces mécaniques en mouvement) faible consommation, petites dimensions et bas coût. Ce type de lidar trouve par exemple des applications dans la détection d'obstacles.

**ETAT DE LA TECHNIQUE**

Un lidar (Light Detection And Ranging) est un appareil servant à la mesure de distance par mesure de temps de vol d'une impulsion lumineuse.

Il émet pour cela une impulsion lumineuse de forte puissance et de courte durée (typiquement quelques ns), et récupère un temps plus tard une impulsion réfléchie/rétrodiffusée sur un obstacle. Connaissant la vitesse de propagation de la lumière, la distance est déduite de ce retard, appelé temps de vol. Elle est calculée selon la formule

$$d = \frac{c.R}{2} \quad (1)$$

dans laquelle $c = 3.10^8 m/s$ est la vitesse de la lumière, $R$ le retard lié à la distance $d$ entre l'émetteur et l'obstacle. Ainsi, pour un obstacle distant de 1m, il est admis que le retard est de 6.67 ns.

Le lidar est constitué :

- d'un émetteur d'impulsions optiques (diode laser ou diode électroluminescente), contrôlé par un composant logique de type microprocesseur, microcontrôleur ou FPGA

- d'un récepteur optoélectronique dont le rôle est la conversion de l'impulsion réfléchie en signal électrique dans le respect de qualité de mesure, en particulier en maximisant le rapport signal à bruit de mesure, noté S/N

- d'un organe de traitement du signal électrique fourni par le récepteur pour en déduire la distance de l'obstacle. Cet organe peut être un convertisseur tempsdistance, ou *« Time to Distance Convert»* (TDC), ou un système de traitement numérique du signal à base de microprocesseur, microcontrôleur ou FPGA.

Typiquement dans le cas de l'utilisation d'un émetteur à diode laser, la puissance optique émise peut aller jusqu'à quelques dizaines de watts sur une durée de quelques nanosecondes. Les ordres de grandeurs de puissances reçues issues des échos sont typiquement de quelques nanowatts à quelques centaines de milliwatts. Le fond lumineux peut varier de la puissance nulle pour le noir complet jusqu'à 1kW/m² (120klux) en cas de plein soleil. Ainsi, un éclairement de 10W/m² correspondant à un éclairage artificiel moyen éclairant une photodiode silicium de 5x5mm² engendrera un courant de photo génération d'environ $500\mu A$, le plein soleil un courant d'environ $20mA$.

Les lidars sont utilisés pour mesurer des distances, cartographier des surfaces, détecter des objets. On distingue plusieurs types de lidars :

Le lidar 1D, souvent à champ étroit, présente un faisceau lumineux impulsionnel émis de faible ouverture (lidar faible champ de vision - *Field Of View - FOV*). Il mesure la distance d'un point précis, où est situé l'objet. Les composants optoélectroniques (diode d'émission de faisceau, photodiode de réception) sont alors souvent associés à des composants optiques (lentilles, filtres,...) pour la collimation et la focalisation des faisceaux. Ces lidars 1D à champ étroit (typiquement moins de 3°) et courte portée sont commercialisés pour des applications de détection d'obstacles dans les applications légères d'objets à déplacement autonome ou semi autonome tels que les drones ou robots au sens large (aspirateurs et tondeuses autonomes, véhicules radiocommandés à détection d'obstacles ...). Ils ont supplanté les traditionnels télémètres à ultrasons dont le champ est beaucoup plus large et dont on ne sait pas exactement quel objet va constituer son premier obstacle détecté.

Les lidars 1D ont l'avantage d'être relativement peu encombrants et faible cout mais présentent un inconvénient majeur qui est un champ de vision étroit, inférieur à 3° (Safran LRF3013, Benewake TF02).

Le besoin de détection d'obstacle nécessitant un champ d'observation large, ce rôle est plutôt assuré actuellement par l'utilisation de lidars 3D à technologie scan. Le faisceau impulsionnel est également de faible ouverture, mais couplé à un système de balayage mécanique pour irradier toute une portion de l'espace: plusieurs tirs dirigés vers plusieurs endroits sont nécessaires pour réaliser une cartographie. Les lidars 3D permettent d'établir une cartographie précise de l'environnement par l'utilisation de systèmes mécaniques plus ou moins complexes ou encore par l'utilisation de MEMS (Micro Electro Mechanic Systems). Ils sont efficaces mais possèdent l'inconvénient d'être surdimensionnés au regard des applications légères, en termes de :

- Volume de données : une cartographie précise nécessite un traitement lourd de données dont il est possible d'imaginer que toutes ne sont pas à traiter

- Encombrement physique important

- Consommation importante (supérieure au W dans la plupart des cas)

- Fréquence de rafraîchissement des mesures faible (quelques dizaines de Hz)

C'est pourquoi dans le domaine des radars de recul nécessitant de détecter des obstacles dans un grand champ de vue, ce sont des dispositifs à caméra et non pas des lidars qui ont supplanté ou complété les capteurs à ultrasons. En effet pour la protection anticollision le champ large d'un capteur à ultrasons est un avantage sur le lidar traditionnel 3D, qui pour balayer un champ large nécessite d'être monté sur une platine tournante. En outre les capteurs à ultrason sont à priori plus faciles d'utilisation de par la faible vitesse de propagation des ondes acoustiques en regard de celle des ondes électromagnétiques, avec pour conséquence des temps d'échos beaucoup plus longs et simples à mesurer. Ces derniers sont notamment retrouvés dans de nombreuses applications telles anticollision véhicules, la robotique, la détection de présence d'objets ou d'êtres vivant.

Cependant les caractéristiques de longueur d'onde et de vitesses de propagation des ondes acoustiques font que les capteurs à ultrasons ont des défauts fondamentaux :

- la forte sensibilité aux conditions atmosphériques et environnementales : humidité, pluie, température, bruit, et il est difficile d'obtenir des portées au-delà du mètre avec une sensibilité raisonnable dans ces conditions climatiques,

- la présence de lobes secondaires parasites dans le champ de mesure avec risque de fausses détections,

- l'insensibilité aux surfaces de faible rugosité (inférieure au mm) vues sous une incidence forte (phénomène de réflexion totale empêchant leur détection).

- la difficulté de détection d'objets fins, de petites dimensions ou surface

- la lenteur de mesure est une limite à la détection d'obstacles en mouvement relatif par rapport au capteur

Un lidar ayant les propriétés de champ large des capteurs à ultrasons, qui éclairerait une scène selon un cône supérieur à 5°, voir 10° ou 20°, permettrait de scruter une large portion de l'espace et de détecter des échos provenant de différents éléments/obstacles présents dans la scène ou champ d'observation, avec une possibilité d'impulsion unique (plus besoin de balayage). De plus un lidar large FOV, quasi insensible à une forte humidité et/ou à la pluie et ayant la possibilité de détecter une surface peinte lisse sous forte incidence, aurait un avantage concurrentiel dans les domaines de l'anticollision encore réservés aux ultrasons. Il pourrait également être utilisé pour le déplacement autonome de robots ou de drones.

Mais le champ large n'est pas le domaine naturel du lidar. En effet le flux optique rétrodiffusé décroît avec la distance (d) en $d^{-4}$ pour les petits objets au lieu de décroître en $d^{-2}$ pour un champ étroit, ce qui en limite la portée. En effet la différence se fait sur la densité d'intensité lumineuse incidente. En champ dit « étroit », il est considéré que toute l'énergie incidente est incluse sur la surface de l'obstacle (autrement exprimé, la surface de l'obstacle est supérieure à la surface éclairée suivant l'angle solide) : l'obstacle reçoit l'intégralité de l'énergie de l'émetteur. Chaque point de l'obstacle rétrodiffuse alors de l'énergie vers le récepteur suivant une loi en $d^{-2}$. Dans le cas d'un champ large, l'obstacle est totalement inclus dans le cône d'éclairement : l'obstacle ne reçoit qu'une partie de l'énergie de l'émetteur suivant une loi en $d^{-2}$, et rétrodiffuse cette énergie vers le récepteur également suivant une loi en $d^{-2}$, avec au global une énergie sur récepteur en $d^{-4}$ de l'énergie de l'émetteur.

En outre les gros objets en arrière-plan masquent les petits en premier plan, pour des raisons expliquées plus loin. La résolution centimétrique est plus difficile à obtenir, les coûts sont à priori plus élevés que pour un capteur à ultrasons.

Classiquement le récepteur présente une réponse impulsionnelle hr(t) connue, que l'on détermine par mesure ou calcul. Une méthode de traitement d'un signal lidar selon l'état de l'art est d'opérer dans l'espace de Fourier. On numérise le signal en sortie du récepteur et on calcul sa transformée de Fourier, puis on lui applique un filtre F0(f) dont la

**EP 4 453 605 B1**

fonction de transfert est proche de l'inverse de la transformée de Fourier de hr(t) :
F0(f) = 1/Hr(f) avec Hr(f) transformée de Fourier de hr(t).

Ces méthodes, couramment dénommée blanchiment de spectre au travers d'un filtre blanchisseur, sont largement décrites dans la littérature mais soulèvent de nombreuses difficultés de stabilité et complexité. Elles aboutissent le plus souvent à la nécessité d'utilisation de puissance de calcul élevée, inaccessible à un simple microprocesseur embarqué basse consommation d'énergie. Elles posent en outre des problèmes au niveau du traitement, la présence de bruit introduisant des divisions par zéro dans les calculs. Les publications de brevet US2013/088726A1 et WO2013/120041A1 ainsi que la publication par Parrish: "Empirical comparison of full-waveform lidar algorithms: Range extraction and discrimination performance", PHOTOGRAMMETRIC ENGINEERING AND REMOTE SENSING, vol. 77, no. 8, 1 août 2011 (2011-08-01), pages 825-838, XP055049568 divulguent des lidars selon l'art antérieur.

Un but de la présente invention est de palier certains des inconvénients précités en proposant une méthode de traitement du signal lidar pour un lidar TOF large champ de vue, permettant de discriminer les éléments/obstacles présents dans la scène éclairée et d'en déterminer la distance, et ce en un seul tir.

## DESCRIPTION DE L'INVENTION

La présente invention a pour objet une méthode de traitement d'un signal issu d'un lidar, ledit lidar réalisant une mesure d'un temps de vol et comprenant un dispositif d'émission configuré pour émettre des impulsions lumineuses en direction d'une scène selon un angle supérieur ou égal à 5° et un dispositif de réception, ledit dispositif de réception présentant une réponse impulsionnelle et comprenant un photo-détecteur configuré pour recevoir des impulsions réfléchies ou rétrodiffusée par au moins un élément de la scène et pour convertir lesdites impulsions en signal électrique, et un circuit d'amplification configuré pour générer un signal électrique amplifié, la méthode comprenant les étapes consistant à :

- A : numériser ledit signal électrique amplifié
- B : appliquer au moins une fonction temporelle de correction, dénommée filtre correcteur, audit signal électrique amplifié numérisé, de manière à générer un signal traité,
  ledit filtre correcteur étant déterminé à partir de ladite réponse impulsionnelle et d'une fonction d'analyse temporelle prédéterminée, ladite fonction d'analyse présentant au moins une valeur non nulle, dénommée discontinuité, à un instant donné dénommé instant de discontinuité, avec un retour vers des valeurs sensiblement nulles autour de ladite discontinuité,
- C : déterminer une distance (di) dudit au moins un élément (Ei) à partir dudit signal traité.

Selon l'invention l'application du filtre correcteur consiste en une convolution du signal électrique amplifié numérisé avec ladite fonction temporelle de correction, ledit filtre correcteur étant déterminé par déconvolution de ladite réponse impulsionnelle par ladite fonction d'analyse prédéterminée.

Selon un mode de réalisation une présence dudit au moins un élément dans ladite scène correspond à un maximum local dudit signal traité, et ladite distance associée est déterminée à partir d'une localisation temporelle dudit maximum local.

Selon un mode de réalisation ladite réponse impulsionnelle présente un maximum à un instant $t_{m-imp}$, et ledit au moins un instant de discontinuité de la fonction d'analyse coïncide temporellement avec ledit instant $t_{m-imp}$.

Selon un mode de réalisation la fonction d'analyse présente des valeurs nulles en dehors de ladite au moins une discontinuité.

Selon un mode de réalisation une fonction d'analyse présente soit une seule discontinuité, soit deux discontinuités, soit trois discontinuités, localisées respectivement à des instants de discontinuité rapprochés dans le temps, c'est-à-dire séparés de quelques points d'échantillonnage.

Selon un mode de réalisation on applique une pluralité de filtres correcteurs déterminés à partir d'une pluralité de fonctions d'analyse, de manière à générer une pluralité de signaux traités associés, ladite distance dudit au moins un élément de la scène étant déterminée à partir de ladite pluralité de signaux traités.

Selon un mode de réalisation ladite pluralité de filtres correcteurs est appliquée via un processus itératif, jusqu'à ce qu'un signal traité final permette la détermination d'une distance correspondant à l'obstacle le plus proche ; le processus itératif consistant à modifier des discontinuités, c'est à dire des valeurs non nulles desdites fonctions d'analyse.

Selon un mode de réalisation on applique d'abord un filtre correcteur correspondant à une fonction d'analyse présentant une seule discontinuité, puis des fonctions d'analyse présentant deux discontinuités ou trois discontinuités, lesdites discontinuités étant modifiées de manière itérative.

Selon un autre aspect l'invention concerne un système lidar par mesure d'un temps de vol comprenant :

- un dispositif d'émission configuré pour émettre des impulsions lumineuses en direction d'une scène selon un angle supérieur ou égal à 5 °

- un dispositif de réception présentant une réponse impulsionnelle et comprenant :

  ◦ un photo-détecteur configuré pour recevoir des impulsions réfléchies ou rétrodiffusée par au moins un élément de la scène et pour convertir lesdites impulsions en signal électrique,
  ◦ un circuit d'amplification configuré pour amplifier ledit signal électrique,

- une unité de traitement dudit signal électrique amplifié configurée pour :

  ◦ numériser ledit signal électrique amplifié,

  ◦ appliquer au moins une fonction temporelle de correction, dénommée filtre correcteur, audit signal électrique amplifié numérisé, de manière à générer un signal traité (sf(t)) ; l'application du filtre correcteur consistant en une convolution du signal électrique amplifié numérisé avec ladite fonction temporelle de correction, ledit filtre correcteur étant déterminé à partir de ladite réponse impulsionnelle et d'une fonction d'analyse temporelle prédéterminée, ladite fonction d'analyse présentant au moins une valeur non nulle, dénommée discontinuité, à un instant donné dénommé instant de discontinuité, avec un retour vers des valeurs sensiblement nulles autour de ladite discontinuité ; ledit filtre correcteur est déterminé par déconvolution de ladite réponse impulsionnelle par ladite fonction d'analyse prédéterminée,

  ◦ déterminer une distance dudit au moins un élément à partir dudit signal traité.

Selon un mode de réalisation le circuit d'amplification comprend un amplificateur transimpédance, un transformateur comprenant un primaire et un secondaire, et une capacité, le primaire du transformateur étant connecté à une anode du photo-détecteur, le secondaire étant connecté à une capacité, ladite capacité étant connectée à une entrée dudit amplificateur transimpédance.

La description suivante présente plusieurs exemples de réalisation du dispositif de l'invention: ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1A illustre un lidar selon l'invention.
La figure 1B illustre un drone en atterrissage muni d'un lidar 1D selon l'état de la technique.
La figure 1C illustre un drone en atterrissage muni d'un lidar selon l'invention.
La figure 2 illustre l'évolution de la convolution pour quatre valeurs de temps, pour la situation représentée figure 1.
La figure 3 illustre le signal $s_0(t)$ obtenu en sortie de récepteur.
La figure 4 illustre le concept d'obstacle fictif.
La figure 5 illustre l'évolution temporelle de différents signaux d'intérêt.
La figure 6 illustre la méthode de traitement du signal lidar selon l'invention.
La figure 7 illustre la chaîne de mesure et de traitement.
La figure 8 illustre la réponse impulsionnelle corrigée.
La figure 9 illustre la méthode temporelle qui opère une transformation de la réponse impulsionnelle non traitée du récepteur en une fonction d'analyse prédéterminée.
La figure 10 illustre les coefficients de la fonction de correction, calculé par déconvolution de la réponse impulsionnelle par la fonction d'analyse prédéterminée.
La figure 11 illustre l'effet d'une fonction d'analyse présentant une seule discontinuité sur un signal Ir.
La figure 12 illustre la limitation d'une fonction d'analyse présentant une seule discontinuité, et d'une certaine largeur, sur un signal Ir.
La figure 13 illustre une fonction d'analyse présentant une seule discontinuité.
La figure 14 illustre une fonction d'analyse présentant deux discontinuités.
La figure 15 illustre une variante de la méthode selon l'invention dans laquelle on applique le filtre correcteur de manière itérative.
La figure 16 illustre les signaux bruts et traités pour une première configuration de 3 obstacles
La figure 17 illustre un exemple de fonction d'analyse simple Dirac (A) et un exemple de fonction d'analyse double Dirac (B).
La figure 18 illustre le signal traité pour une deuxième configuration de 3 obstacles

La figure 19 illustre le signal traité pour une troisième configuration de 3 obstacles.

La figure 20 illustre les signaux traités pour la troisième configuration traitée de manière itérative par une fonction d'analyse double Dirac.

La figure 21 illustre un dispositif de réception d'un lidar selon l'état de la technique.

La figure 22 illustre un dispositif de réception selon une variante du lidar selon l'invention.

## DESCRIPTION DETAILLEE DE L'INVENTION

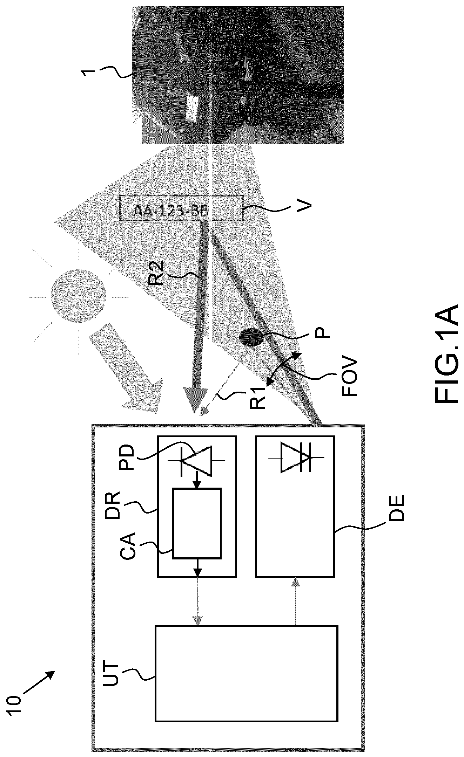

Un lidar TOF large FOV 10 selon l'invention est illustré figure 1A. Il comprend un dispositif d'émission DE configuré pour émettre des impulsions lumineuses en direction d'une scène selon un angle (FOV) supérieur ou égal à 5°, préférentiellement 10°. L'élément émissif est par exemple une diode laser ou une diode électroluminescente. Le choix de longueur d'onde pour un lidar selon l'invention est plus vaste que pour un lidar à champ étroit, car pour la sécurité oculaire le fait d'utiliser un champ large limite grandement les risques. Préférentiellement on choisit la longueur d'onde d'éclairement proche du maximum de sensibilité du détecteur dans un but d'optimisation de réception.

Le lidar 10 comprend également un dispositif de réception DR (ou récepteur) comprenant un photo-détecteur PD configuré pour recevoir des impulsions réfléchies ou rétrodiffusée par au moins un élément (Ei i indice de l'élément) de la scène et pour convertir les impulsions réfléchies en signal électrique et un circuit d'amplification CA configuré pour amplifier le signal électrique. De manière classique le récepteur (photo-détecteur et circuit d'amplification) présente une réponse impulsionnelle hr(t) que l'on peut mesurer et/ou déterminer par le calcul.

Une unité de traitement UT contrôle l'émission, typiquement via un composant logique de type microprocesseur, microcontrôleur ou FPGA, numérise le signal électrique amplifié, et le traite de manière à en extraire l'information utile, c'est-à-dire la présence des éléments dans le champ de détection et leur distance respective. L'unité de traitement UT du lidar selon l'invention met en œuvre une méthode de traitement particulière selon l'invention décrite plus loin.

Dans l'exemple de la figure 1A on a deux éléments E1 et E2 dans le champ de détection, respectivement un poteau P et un véhicule V. L'impulsion initiale Ii est émise à l'instant t=0, et le photo-détecteur reçoit, à l'instant t1, une première impulsion Ir1 issue de la rétrodiffusion du poteau P et, à l'instant t2, une deuxième impulsion Ir2 issue de la rétrodiffusion du véhicule V. Le détecteur reçoit également le cas échéant de la lumière ambiante telle que la lumière du soleil. Pour l'exemple d'un lidar de recul selon l'invention embarqué sur un véhicule V, la photo 1 illustre la scène éclairée par le lidar du véhicule V. De manière générale le lidar selon l'invention peut être embarqué sur tout objet en mouvement : automobile, drone, robot, canne de malvoyant... Pour un bon fonctionnement le lidar doit détecter la présence du poteau P et en déterminer sa distance d1 sans être gêné par la rétrodiffusion du véhicule V.

Selon un autre exemple le Lidar est statique et détecte la présence d'objets statiques ou en mouvement.

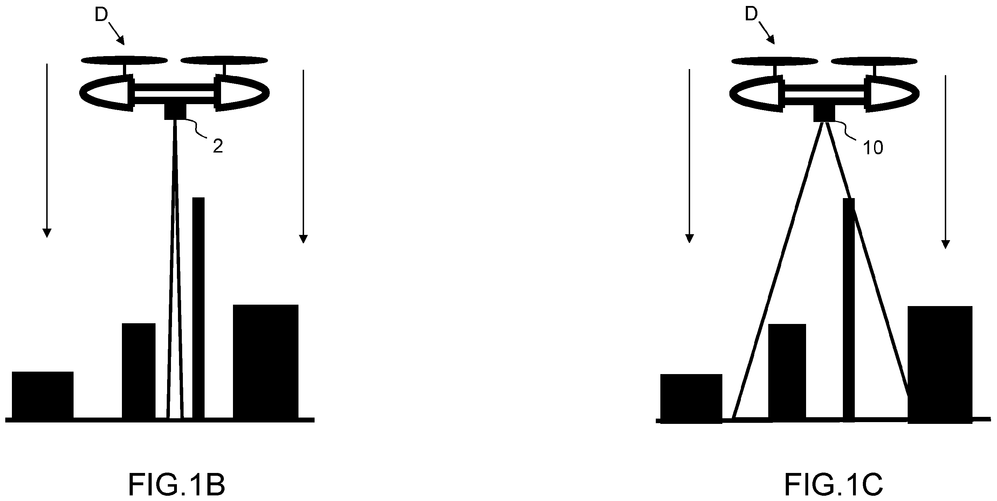

L'utilisation d'un lidar de proximité grand champ de vue selon l'invention tel qu'illustré sur la figure 1 implique des particularités de mesure et des difficultés. Le large champ de détection implique la possibilité d'y contenir plusieurs obstacles. Cet aspect diffère de beaucoup d'autres applications lidar pour lesquels les angles d'ouverture des émetteurs sont réduits par l'ajout d'optiques spécifiques de collimation avec pour conséquence la présence d'un seul obstacle dans le champ d'analyse.

La figure 1B illustre un drone D en action de descente sur un terrain accidenté muni d'un lidar 1D 2 selon l'état de la technique : la détection d'obstacle est incertaine du fait du champ étroit.

La figure 1C illustre ce même drone muni d'un lidar 10 selon l'invention permettant, grâce au grand champ et au traitement du signal selon l'invention, une détection exacte des obstacles.

Une première conséquence de l'ouverture du champ est l'étalement spatial de l'énergie émise conduisant à un éclairement moindre des obstacles qui fournissent en retour des échos moindres, plus difficiles à mesurer que dans le cas d'une émission de faisceau focalisé ou collimaté. Ce point, par ailleurs favorable à la notion de sécurité oculaire, soulève la notion de rapport signal sur bruit de mesure.

Une deuxième conséquence de l'ouverture de champ de détection est la probabilité plus importante d'y trouver une source émissive forte, telle le soleil.

Enfin la proximité des obstacles est synonyme de mesure de temps d'échos courts, nécessitant à priori une électronique de détection rapide.

Dans la suite du document, nous considérons que l'émetteur fourni une impulsion lumineuse temporellement parfaitement localisée de type fonction de Dirac :

$$I_i(t) = \delta(t).$$

Un obstacle situé à distance $d_1$ réfléchira une partie de l'énergie de cette impulsion, appelé écho, vers le récepteur. L'écho peut être décrit par la relation suivante :

$$I_{r1}(t) = a_1 \delta(t - R) \qquad \text{avec} \quad R_1 = \frac{d_1}{c},$$

où c est la vitesse de la lumière, $a_1$ l'amplitude, $R_1$ le retard lié à la distance $d_1$ entre l'émetteur et l'obstacle.

En cas de présence de N obstacles dans le champ de détection, le récepteur mesure un signal optique composé de la somme des échos :

$$I_r(t) = \sum_{n=1}^{N} a_n \delta(t - R_n) \quad (2)$$

A ces signaux optiques porteurs d'information viennent s'ajouter un fond lumineux $A_0$ (éclairage ambiant, soleil) considéré ici comme constant ou faiblement variable, pour aboutir au signal optique global

$$I_{gl}(t) = A_0 + \sum_{n=1}^{N} a_n \delta(t - R_n) \qquad (3)$$

De manière classique la récupération du signal optique $I_{gl}(t)$ par le récepteur, puis sa conversion en signal électrique amplifié $s_0(t)$ au moyen d'un système amplificateur, s'accompagne de certaines modifications du signal. L'amplification est inévitablement associée à l'ajout d'un bruit de mesure ñ(t) et à une bande passante limitée. Cette limitation a pour conséquence un élargissement temporel de chaque impulsion réfléchie par effet de convolution entre les impulsions et la réponse impulsionnelle $h_r(t)$ de l'ensemble détecteur-amplificateur (récepteur) :

$$s_0(t) = \left[I_{gl}(t) + \tilde{n}(t)\right] * h_r(t) \qquad (4)$$

La conséquence directe du bruit est une erreur sur la localisation temporelle de l'instant de retour d'une impulsion écho, voire l'impossibilité de détection si cette dernière est noyée dans le bruit.

La limitation de la bande passante de l'amplificateur conduit à la difficulté voire l'impossibilité de discriminer des impulsions échos trop proches. En effet la réponse impulsionnelle $h_r(t)$ du récepteur (ensemble détecteur et circuit amplificateur) est directement liée à sa réponse fréquentielle, donc sa bande passante. Selon les résultats de la théorie de l'analyse de Fourier pour les systèmes linéaires (ici le récepteur), une faible bande passante conduira à une réponse impulsionnelle longue.

Pour une meilleure compréhension, il est rappelé que l'opérateur convolution noté * est d'expression mathématique générique suivante :

$$s_0(t) = (h_r * I_r)(t) = \int h_r(u) I_r(t - u) du . \qquad (5)$$

Dans la suite on ne tient pas compte du bruit et la composante continue de l'éclairement. Dans la formulation de l'équation (5) la grandeur d'entrée est une intensité lumineuse $I_r$, la grandeur de sortie est une tension $s_0(t)$, et hr(t) est la réponse impulsionnelle de l'ensemble photodétecteur + amplificateur.

En prenant l'exemple d'une scène à deux échos :

$$I_r(t) = I_{r1}(t) + I_{r2}(t) = \text{I1(t-R1)} + \text{I2(t-R2)}$$

avec I1 et I2 respectivement proportionnelle à a1 et a2 (formule (2)).

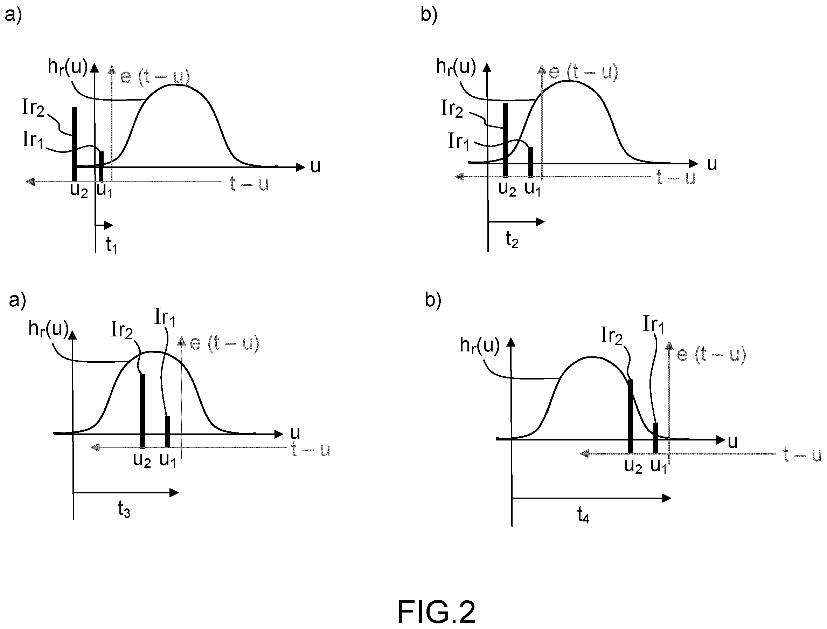

Pour illustration, la figure 2 illustre l'évolution de la convolution pour quatre valeurs de t, $t'_1$ à $t'_4$ pour la situation représentée figure 1, avec un poteau fin P renvoyant peu d'écho (Ir1) placé devant une voiture V revoyant plus d'écho (Ir2) :

a) $t = t_1$ : seule l'impulsion Ir1 interagit avec la réponse impulsionnelle $h_r$. La surface commune entre l'impulsion et la réponse impulsionnelle est faible, le signal de sortie est également faible et entame une lente croissance.

b) $t = t_2$ : les deux impulsions Ir1 et Ir2 interagissent avec la réponse impulsionnelle $h_r$. Les surfaces communes augmentent, le signal de sortie croit, par l'interaction des deux impulsions avec la réponse impulsionnelle.

c) $t = t_3$ : les deux impulsions interagissent avec $h_r$ de manière maximale. Les surfaces communes sont maximales, le signal de sortie également.

d) $t = t_4$ : les deux impulsions sortent lentement de la réponse impulsionnelle $h_r$, d'abord l'impulsion Ir1 puis l'impulsion Ir2. Les surfaces communes diminuent lentement, le signal de sortie décroit lentement.

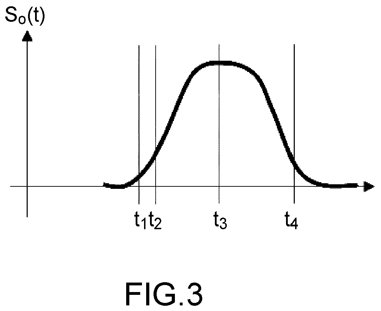

La figure 3 illustre le signal $s_0(t)$ obtenu en sortie de récepteur.

Le traitement standard sur le signal issu du récepteur pour détecter la présence d'un obstacle s'effectue par recherche du maximum et de l'instant tm associé, supposé correspondre à l'écho d'un obstacle à détecter et donc au retard R. On détermine alors la distance de l'obstacle avec la formule (1), avec tm retard lié à la distance (temps de vol).

Les figures 2 et 3 montrent que le signal de sortie issu du récepteur n'est le résultat de l'interaction avec une seule des deux impulsions seulement en début ou fin de cycle, là où la réponse impulsionnelle est la plus progressive, donc là où le signal de sortie croit ou décroit le plus lentement. Au final le signal de sortie observé $s_0(t)$ est quasiment toujours le résultat de l'interaction du récepteur avec les deux impulsions, sans pouvoir en distinguer clairement les effets de l'une et de l'autre. Par exemple, l'effet de l'écartement et surtout du resserrement des deux impulsions n'entrainerait que peu de différence sur le signal de sortie. La discrimination temporelle n'est alors pas possible.

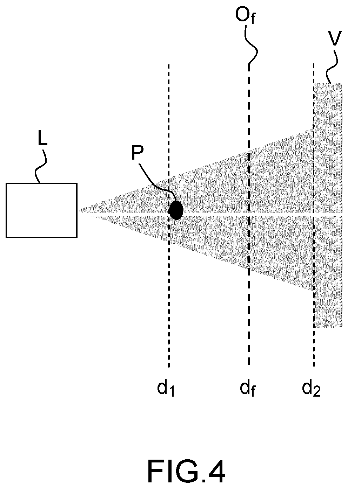

Le maximum de $s_0(t)$ est une sorte de barycentre des deux impulsions échos en fonction de leurs amplitudes et retards respectifs (ai, ti) correspondant au final à un obstacle fictif, au lieu de deux réels : le traitement standard identifie un obstacle fictif Of en t'3, correspondant à une distance df, et non pas deux obstacles aux distances d1 et d2, tel qu'illustré figure 4. Sans rendre compte de la présence de plusieurs échos, cet obstacle fictif est situé toujours plus loin que l'obstacle le plus proche. A titre d'exemple: un obstacle est situé à $d_1$=1m, et un autre plus éloigné situé à $d_2$=3m. L'obstacle fictif sera localisé entre $d_1 \leq$ *obstacle fictif* $\leq d_2$. Il est situé d'autant plus éloigné de $d_1$ que le rapport d'amplitude $\frac{a_1}{a_2}$ est faible.

Par l'effet de convolution, deux impulsions échos proches qui interagissent avec une réponse impulsionnelle large se retrouvent intégralement incluses en même temps dans cette réponse impulsionnelle, sans possibilité de les distinguer. Ainsi un lidar L classique effectuant un traitement standard en sortie du circuit d'amplification n'est pas capable de discriminer deux obstacles proches présents dans le champ de vue.

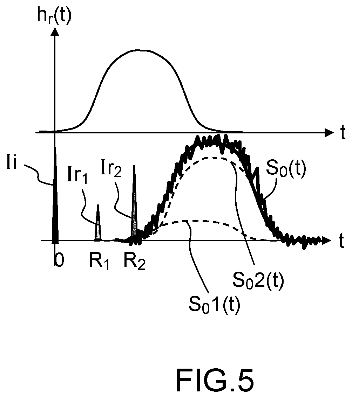

La figure 5 synthétise l'analyse précédente et illustre l'évolution temporelle de différents signaux d'intérêt. L'impulsion li initiale est émise t=0, l'impulsion Ir1 (poteau) est reçue à R1 et l'impulsion Ir2 (véhicule) à R2. Le signal $s_01(t)$ correspond à la réponse (sans bruit) du circuit d'amplification à la présence du poteau seul, le signal $s_02(t)$ à la réponse (sans bruit) du circuit d'amplification à la présence du véhicule seul, et le signal $s_0(t)$ à la réponse du circuit d'amplification à la présence des deux obstacles et en tenant compte du bruit de mesure. A partir de $s_0(t)$ il est impossible de discriminer les deux obstacles.

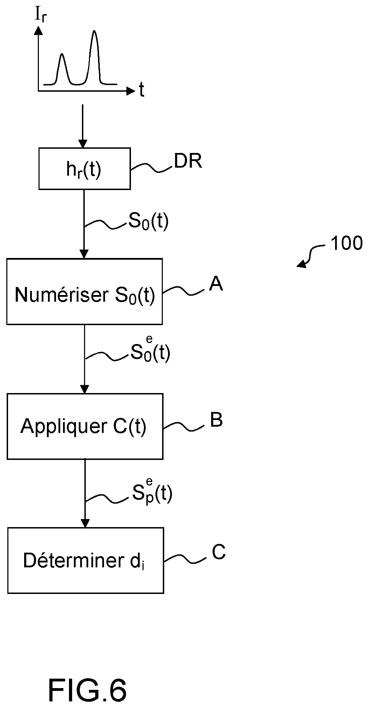

L'unité de traitement du lidar 10 selon l'invention met en œuvre une méthode 100 de traitement du signal reçu permettant de résoudre le problème précité de non-discrimination des obstacles, illustrée figure 6.

Selon un autre aspect l'invention concerne une méthode 100 de traitement du signal lidar, qui s'applique à un lidar embarqué sur un objet statique ou en mouvement, et permet de détecter les obstacles devant le lidar.

Elle comprend une première étape A de numérisation du signal électrique amplifié $s_0(t)$. On note $s_0^e(t)$ ce signal numérisé, et Fe la fréquence d'échantillonnage. Un système numérique a pour particularité, par rapport aux systèmes analogiques, de ne connaitre les informations qu'aux instants d'échantillonnages $T_e = \frac{1}{F_e}$. La désignation d'information numérique est indiquée ici par l'exposant e pour les signaux issus des différents traitements.

Dans une étape B on applique au moins une fonction temporelle de correction, dénommée filtre correcteur $C^e(t)$, au signal électrique amplifié numérisé $s_0^e(t)$, de manière à générer un signal traité $s_p^e(t)$. Préférentiellement l'application du filtre correcteur consiste en une convolution du signal électrique amplifié numérisé $s_0^e(t)$ avec la fonction temporelle de correction C(t), également numérisée :

$$s_p^e(t) = (s_0^e * C^e)(t) \qquad (6)$$

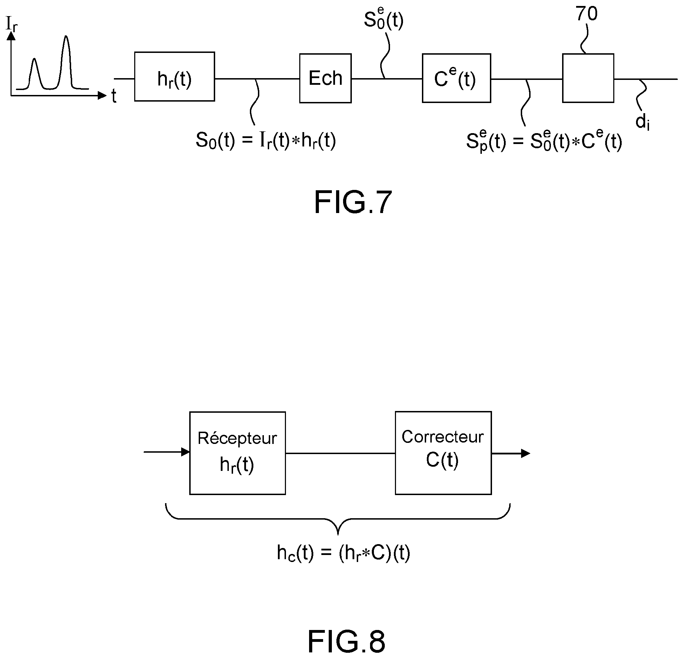

Le signal $s_0(t)$ en sortie du dispositif de réception est classiquement déterminé par une convolution de l'impulsion lumineuse d'entrée Ir(t) avec la réponse impulsionnelle hr(t) de DR (formule (5)). La chaîne de mesure et de traitement est illustrée figure 7.

Le filtre $C^e(t)$ agit dans le domaine temporel, directement sur $s_0^e(t)$, il n'y a pas de transformation pour passer dans l'espace de Fourier. Le filtre $C^e(t)$ appliqué a pour but d'améliorer la résolution temporelle de la détection pour discriminer les obstacles. $C^e(t)$ est déterminé à partir de la réponse impulsionnelle échantillonnée $h_r^e(t)$ et d'une fonction d'analyse temporelle prédéterminée (désirée) $h_c^e(t)$. Tout se passe comme si on avait substitué à la réponse hr(t) une réponse impulsionnelle corrigée hc(t), grâce au correcteur C(t), comme illustré figure 8 et formule (7) ci-dessous.

L'introduction d'une discontinuité dans la fonction d'analyse (voir plus loin) a pour objectif d'obtenir une réponse impulsionnelle corrigée avec une rupture de pente permettant la discrimination des obstacles.

$$hc(t) = (hr * C)(t) \qquad (7)$$

Pour la mise en œuvre de la méthode 100 selon l'invention il convient donc d'avoir connaissance de la réponse impulsionnelle hr(t) (mesure et/ou simulation), qui est numérisée et mémorisée.

La transformation de la réponse impulsionnelle initiale hr vers la réponse impulsionnelle désirée hc est réalisée à partir d'une méthode temporelle.

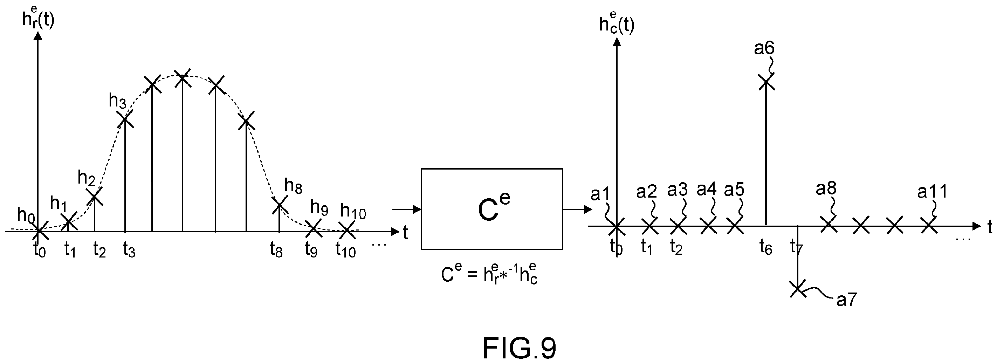

Les différents calculs s'effectuent bien entendu sur les valeurs numérisées de ces fonctions, tel qu'illustré figure 9. On dénomme :

- h0, h1, h2 ... les différentes valeurs numérisées de la réponse impulsionnelle hr(t) aux instants d'échantillonnage t0, t1, t2...

- c0, c1, c2 ... les différentes valeurs numérisées de la fonction de correction C(t) aux instants d'échantillonnage t0, t1, t2 ...,

- a0, a1, a2,... les différentes valeurs numérisées de la fonction d'analyse hc(t) aux instants d'échantillonnage t0, t1, t2 (dans cet exemple la fonction d'analyse présente deux discontinuités de valeurs a6 et a7 à deux instants d'échantillonnage successifs t6 et t7, les autres valeurs étant nulles).

Le filtre correcteur C est déterminé par déconvolution de la réponse impulsionnelle hr par la fonction d'analyse hc :

$$C(t) = (hr *^{-1} hc)(t) \qquad (8)$$

Appliqué aux valeurs numérisées, on détermine les coefficients ck du correcteur avec les formules suivantes :

$$c_0 = \frac{a_0}{h_0}$$

$$c_{k \geq 1} = \frac{1}{h_0}\left(a_k - \sum_{m=1}^{n} h_m \cdot c_{k-m}\right)$$

On remarque que le calcul des coefficients correcteurs nécessite de diviser par h0, ce qui peut poser numériquement des problèmes lorsque h0 présente une valeur très faible voire nulle. Une solution est d'ajouter à l'ensemble de la réponse impulsionnelle une constante et de calculer les coefficients. La valeur de la constante est augmentée par itération successives jusqu'à atteindre des valeurs convergentes des coefficients.

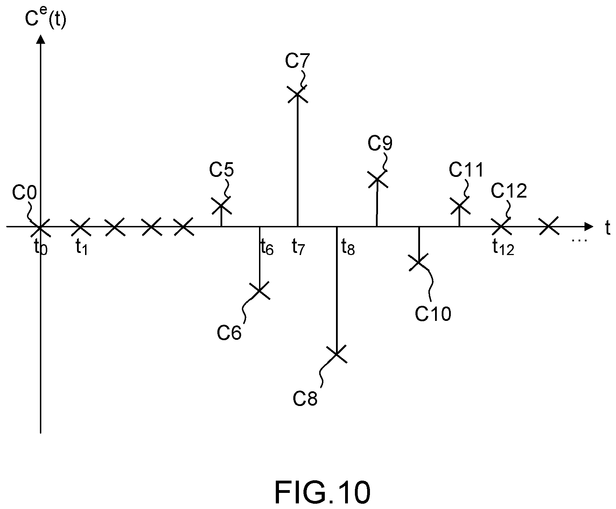

Un exemple de ces coefficients ck est illustré figure 10.

La fonction d'analyse prédéterminée identifiée par les inventeurs présente au moins une valeur non nulle A0, dénommée discontinuité, à un instant donné dénommé instant de discontinuité td0, avec un retour vers des valeurs sensiblement nulles autour de ladite discontinuité. Le retour est préférentiellement rapide. La fonction d'analyse est numérisée sur des points d'échantillonnage (voir figure 9) et on entend par retour rapide vers des valeurs sensiblement nulles une diminution qui s'opère sur un faible nombre de points d'échantillonnage. Le nombre de points maximum sur lesquels doit s'effectuer le retour à zéro dépend de Fe, de la distance entre objets, de l'amplitude des échos... De manière synthétique, les performances de séparation sont d'autant meilleures que la diminution s'opère sur un faible nombre de point d'échantillonnage, mais un gain existe toujours, si minime soit-il, dès lors que la fonction d'analyse possède une ou plusieurs pentes supérieures à celle(s) de la réponse impulsionnelle.

Ainsi l'important est que cette diminution opère comme une discontinuité (rupture de pente) au regard de la variation lente de hr(t). Typiquement la descente s'effectue sur au plus quelques points à une dizaine de points d'échantillonnage.

Enfin dans une étape C on détermine une distance di de l'élément Ei (obstacle indicé i) à partir du signal traité

$s_p^e(t)$. Cette détermination est opérée par un traitement 70 qui consiste à localiser le ou les maxima locaux de $s_p^e(t)$, et le ou les instants tmi correspondants à ce ou ces maxima locaux. Cette localisation temporelle du maximum local tmi correspond au retard ou temps de vol Ri pour l'obstacle associé Ei, tmi=Ri, et on en déduit la distance di de l'obstacle à partir de cet instant tmi, avec la formule (1).

Les maximums locaux sont recherchés dans une plage temporelle d'intérêt, selon l'application et/ou ce qui est recherché. On s'intéresse particulièrement à l'obstacle le plus proche de l'objet sur lequel est embarqué le lidar et sa distance au lidar. La distance d'intérêt dans laquelle on sonde la scène devant le lidar dépend de l'application.

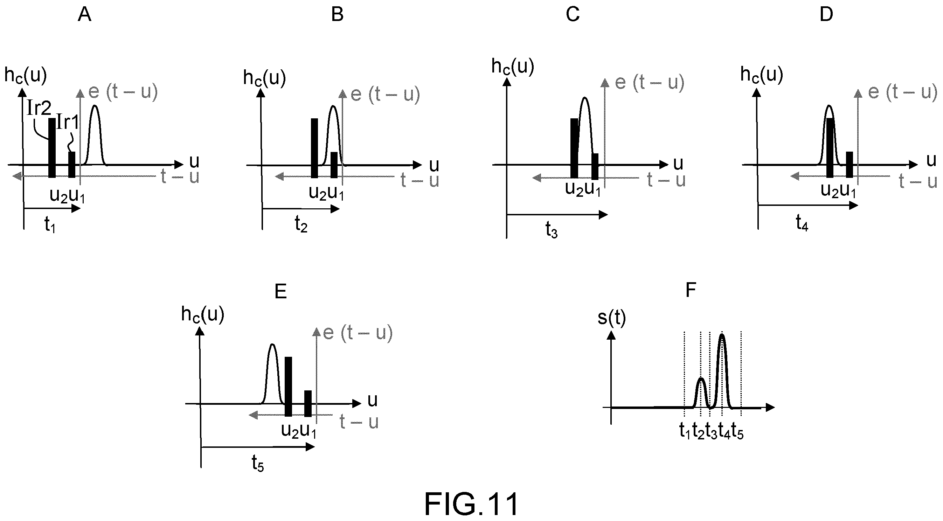

A titre illustratif la figure 11 montre l'effet une fonction d'analyse hc(u) en forme de gaussienne et présentant une seule discontinuité (on entend par discontinuité un maximum avec un retour vers des valeurs proches de zér0) sur un signal Ir comprenant deux impulsions Ir1 et Ir2. Les différentes courbes A à D illustrent différents instants lors de la convolution.

$t = t_1$ : aucune des impulsions n'interagit encore avec la réponse impulsionnelle corrigée hc.

$t = t_2$ : l'impulsion Ir1 interagit avec la réponse impulsionnelle corrigée $h_c$ mais pas l'impulsion Ir2

$t = t_3$ : L'impulsion Ir1 n'interagit plus avec $h_c$, avec pour effet une décroissance nette des surfaces communes donc du signal de sortie

$t = t_5$ : A son tour l'impulsion Ir2 n'interagit plus avec $h_c$, provoquant une nouvelle décroissance nette du signal de sortie

La courbe F illustre le résultat du traitement par convolution hc * Ir :

$$hc * Ir = Ir * hc = Ir * hr * C = s_0 * C = s_p$$

L'introduction d'au moins une discontinuité permet de dissocier à un moment les interactions des deux impulsions avec la réponse impulsionnelle, et permet de discriminer clairement les instants d'arrivée des échos.

Ainsi le lidar selon l'invention permet de détecter un petit obstacle devant un obstacle plus grand, par exemple un mur lisse de biais.

Le lidar selon l'invention présente des avantages non accessibles aux capteurs à ultrasons et peut donc s'y substituer dans l'anticollision en robotique. Il présente des caractéristiques améliorées en termes de :

- sensibilité aux conditions météo : insensibilité à la pluie ou à une forte humidité,

- champ de détection : largeur de l'ordre de 5° ou 10° ou 20° ou 30°,

- détectivité : détection d'objets fins ou peu réflectifs,

- séparation d'obstacles : discrimination d'obstacles rapprochés, détection d'un objet fin placé devant un objet large, détection d'échos multiples proches, malgré une bande passante faible du circuit d'amplification,

- acquisition : lidar flash, système « monotir » possible (un tir laser = 1 résultat)

- cadence de rafraichissement : élevée, supérieure à 10kHz

Conçu pour des applications embarquées portables, il présente également des caractéristiques intéressantes en termes d'intégration :

- consommation réduite (monotir): alimentation possible sur piles ou batteries

- dimensions réduites: quelques cm$^3$ sont possibles

- masse réduite: quelques grammes sont possibles,

- coût réduit.

Il est adaptable : l'ajout d'optiques permet l'augmentation de sa portée, tout en conservant les capacités de discrimination d'échos.

Ces caractéristiques permettent l'utilisation du lidar dans les domaines de la robotique, des drones, du déplacement autonome, de l'anticollision...

La détection d'échos multiples proches permet entre autres :

d'offrir une meilleure connaissance du terrain environnant et permettre une meilleure anticipation de la trajectoire,

la détection et la prise en compte d'échos faibles dus à des obstacles de petites tailles placés plus proches que des obstacles de grandes tailles,

d'améliorer le déplacement d'un drone ou robot dans un contexte d'ensemble dense, par exemple en zone urbaine, forestière.

Le traitement du signal selon l'invention, permettant la discrimination d'échos multiples avec peu de puissance de calcul, peut être intéressant pour d'autres équipements mesurant des temps de vol, dans les domaines de la réflectométrie, sonar, ... et pour la surveillance de locaux.

L'aspect monotir permet également une plus grande discrétion du lidar.

A une fréquence d'échantillonnage $F_e$ correspond une période d'échantillonnage $T_e$, quantum de temps au bout duquel le système numérique recalcule ses informations. La période d'échantillonnage correspond à la résolution temporelle de la mesure, soit à la résolution de discrimination spatiale dans le cas du lidar.

A la résolution temporelle actuelle $T_e$ correspond une résolution spatiale de $\frac{T_e}{6.67ns}$. Concrètement, la fréquence d'échantillonnage est fixée par la référence du convertisseur analogique numérique (CAN) utilisé et détermine la résolution de discrimination spatiale entre obstacles. Par exemple :

75cm @ $F_e$ = 200$MHz$

37.5cm @ $F_e$ = 400$MHz$

5.5cm @ $F_e$ = 3000$MHz$

Par la génération d'une ou plusieurs discontinuités dans la réponse impulsionnelle de la chaine de traitement, le pouvoir de discrimination n'est plus lié à la bande passante du récepteur mais à la fréquence d'échantillonnage du système numérique : le traitement du signal selon l'invention rend possible l'utilisation d'un récepteur à faible bande passante pour ses qualités de sensibilité et de rapport S/N (signal sur bruit) tout en bénéficiant d'une capacité de discrimination élevée.

Pour une meilleure sensibilité, l'au moins un instant de discontinuité td0 est préférentiellement choisi au voisinage de l'instant du maximum de la réponse impulsionnelle $h_r(t)$, dénommé $t_{m-imp}$ On entend par voisinage de $t_{m-imp}$ un instant situé dans un intervalle de temps autour de $t_{m-imp}$ tel que l'amplitude de la réponse impulsionnelle hr associée à cet instant soit supérieur ou égale à une fraction non nulle de l'amplitude maximale de hr, préférentiellement supérieure ou égale à l'amplitude maximum divisée par 4. Préférentiellement l'au moins un instant de discontinuité td0 coïncide avec $t_{m-imp}$.

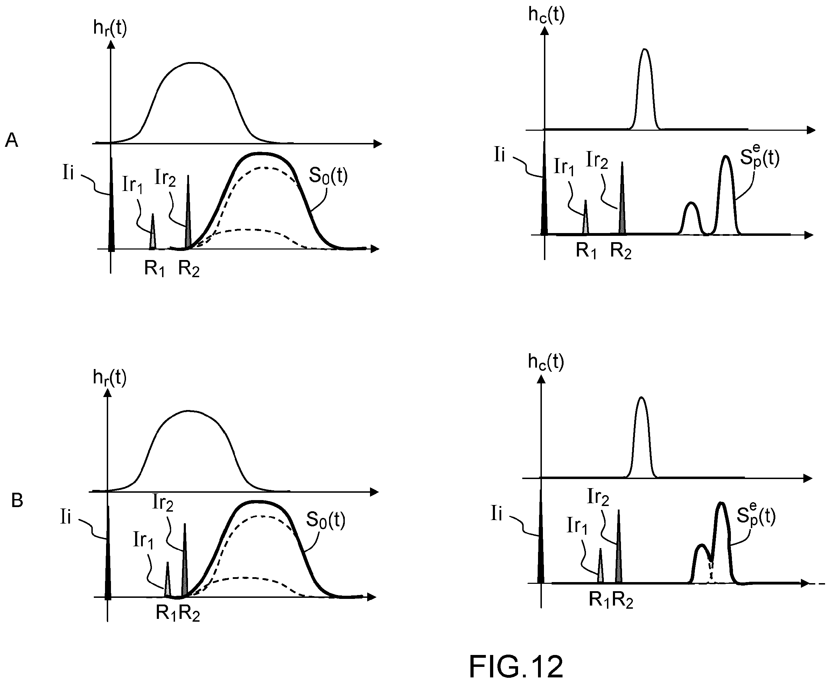

La figure 12 illustre une limitation de l'utilisation d'une fonction d'analyse ne présentant qu'une discontinuité avec une largeur donnée. Les courbes de gauche sont équivalentes à la courbe de la figure 5, sans bruit, et illustrent le résultat de la convolution avec la réponse impulsionnelle non traitée hr. Les courbes de droite illustrent la convolution avec la fonction d'analyse gaussienne. Les courbe A et B correspondent respectivement à deux impulsions Ir1 et Ir2 séparées de deux temps différents, et plus précisément des obstacles plus espacés pour A et plus proches pour B. Lorsque les impulsions échos sont suffisamment espacées (vis à vis de la largeur de la gaussienne), on obtient une bonne séparation (cas A). Pour le cas B la séparation est de qualité moyenne. Une fonction d'analyse d'une certaine largeur (type gaussienne dans l'exemple) peut suffire à réaliser une séparation d'obstacle, mais, de par sa largeur non nulle, elle est moins efficace qu'une fonction type Dirac (discontinuité infiniment étroite).

Les inventeurs ont identifié trois types de fonctions d'analyse particulièrement pertinentes lorsqu'elles sont utilisées en combinaison.

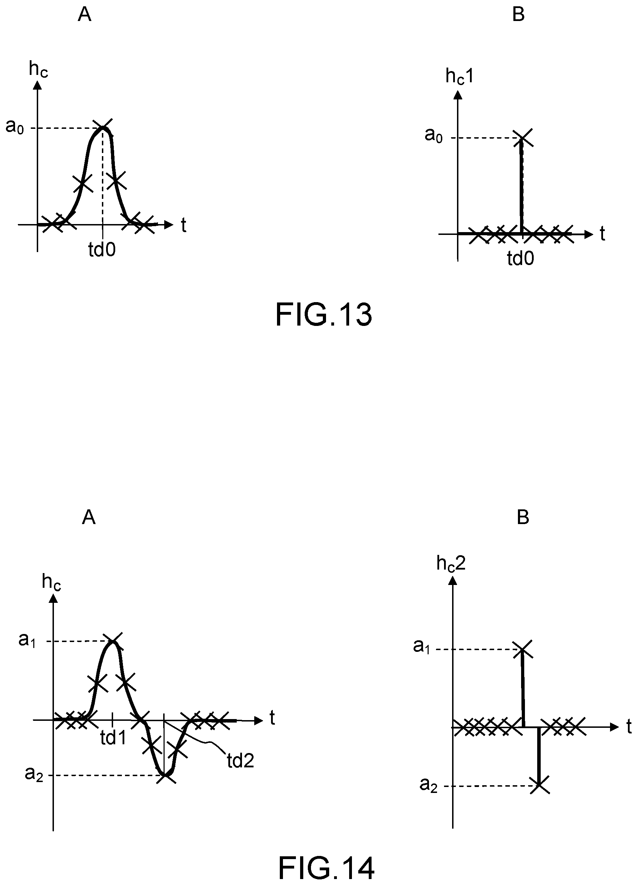

Le premier type, illustré figure 13 et déjà commenté, est une fonction d'analyse présentant une seule discontinuité (A0, td0). La fonction A à gauche correspond à une valeur non nulle A0 et un retour à des valeurs nulles sur un point d'échantillonnage (croix) de chaque côté.

Les meilleurs résultats ont été obtenus avec une fonction telle que représentée en B à droite, qui présente des valeurs nulles en dehors de la discontinuité A0, également dénommée simple Dirac. La discontinuité est alors la plus raide possible. Préférentiellement td0= $t_{m-imp}$.

Le deuxième type, illustré figure 14 est une fonction d'analyse présentant deux discontinuités, une première discontinuité A1 à un premier instant de discontinuité td1 et une deuxième discontinuité A2 à un instant de discontinuité td2, td1 et td2 étant rapprochés dans le temps, c'est-à-dire séparés de quelques points d'échantillonnage, car il s'agit ici de séparer des impulsions échos proches.

La fonction A à gauche correspond à des valeurs non nulles A1 et A2, avec un retour à des valeurs nulles sur un point d'échantillonnage de chaque côté, pour les deux discontinuités (à titre d'exemple). Toujours à titre d'exemple il y a 3 points d'échantillonnage entre les instants td1 et td2. Préférentiellement pour une meilleure efficacité de la fonction on choisit deux discontinuités de signes différents, une discontinuité de valeur positive et une discontinuité de valeur négative. Dans l'exemple A1>0 et A2<0. Par exemple on place td1 à $t_{m-imp}$, mais cela peut être td2, ou alors $t_{m-imp}$ est situé entre td1 et td2. L'important est que td1 et td2 soient localisés au voisinage de $t_{m-imp}$.

Les meilleurs résultats ont été obtenus avec une fonction telle que représentée en B à droite, qui présente des valeurs nulles en dehors des discontinuités A1 et A2, séparées du minimum possible soit aucun point d'échantillonnage, également dénommée double Dirac. Ici le retour vers des valeurs nulles s'effectue en moins d'un point d'échantillonnage, la pente entre les deux discontinuités est la plus raide possible. Par exemple on place td1 à $t_{m-imp}$, mais cela peut être td2.

Le troisième type est une fonction d'analyse présentant trois discontinuités rapprochées dans le temps.

Selon une variante les inventeurs ont montrés que ces types de fonction permettent un traitement amélioré lorsqu'elles sont combinées. Ceci est rendu possible par la simplicité du processus de calcul. Ainsi selon cette variante on applique une pluralité de filtres correcteurs Cj(t) (j indice du filtre), précalculés à partir d'une pluralité de fonctions d'analyse hcj(t) prédéfinies, de manière à générer une pluralité de signaux traités associés sfj(t) complémentaires.

La distance des éléments de la scène Ei est déterminée à partir de la pluralité de signaux traités, par détection de maxima locaux et comparaison de leur position respective dans les différents signaux traités.

Un exemple est la détection de l'obstacle le plus proche du lidar. Selon un mode de réalisation le premier type de fonction d'analyse est utilisé pour identifier la plage temporelle d'intérêt dans laquelle est détectée cet obstacle le plus proche. Puis l'application de filtres correcteurs déterminés à partir du deuxième type de fonction d'analyse, avec différentes valeurs pour A1 et/ou A2, permet la localisation finale de cet obstacle le plus proche dans la plage temporelle d'intérêt, en permettant de scruter localement la présence d'échos, par exemple de très faibles amplitudes et masqués par d'autres plus importants. En effet les inventeurs ont montré qu'une fonction d'analyse à une seule discontinuité permet un balayage complet de l'espace d'intérêt (mais pouvant manquer de précision) tandis qu'une fonction d'analyse à deux discontinuités réalise une fonction « loupe » au voisine de l'obstacle le plus proche (voir exemple plus loin).

Par exemple, lorsque A2=-A1, la fonction d'analyse présentée est équivalente à une dérivée, communément utilisée pour les études locales de fonctions ou signaux. Le résultat est que ladite fonction d'analyse fournira la dérivée de la somme des échos, apportant des informations supplémentaires sur leur localisation.

Selon un autre exemple la fonction présentant trois discontinuités, par exemple égales respectivement à +1, -2, et +1, est équivalente à une dérivée seconde.

Bien entendu les trois types de fonctions mono, bi et tri Dirac décrites ci-dessous ne sont que des exemples de fonction d'analyse possible. On peut également envisager d'autres fonctions d'analyses spécifiques aux impulsions émises pour affiner la détection des échos.

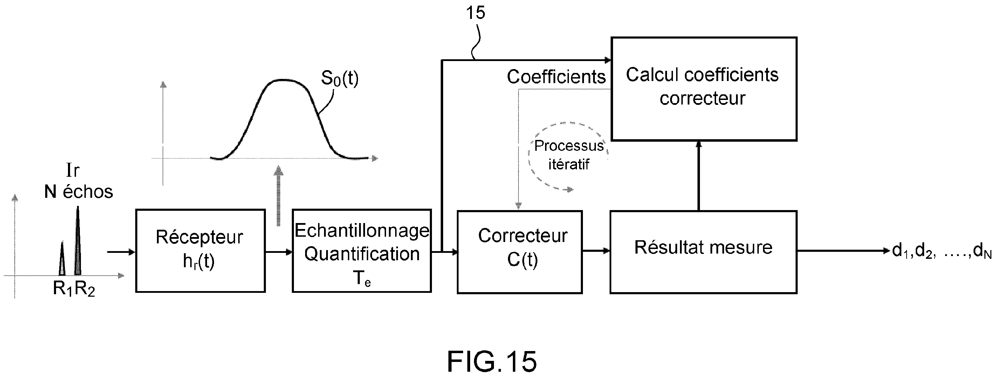

Selon une variante la pluralité de filtres correcteurs est appliquée via un processus itératif, tel qu'illustré figure 15, jusqu'à ce qu'un signal traité final permette la détermination d'une distance correspondant à l'obstacle recherché, typiquement l'obstacle le plus proche. Dans ce cas les filtres sont déterminés au fur et à mesure dans la boucle, en recalculant des coefficients c0, et/ou c1/c2, et/ou c1,c2 et c3, en fonction du résultat obtenu, c'est à dire du signal traité spj(t), et plus particulièrement de la position de ou des maxima locaux. Le processus itératif consiste à modifier des discontinuités, c'est à dire des valeurs non nulles desdites fonctions d'analyse. Une branche optionnelle 15 permet la mesure de la réponse impulsionnelle du dispositif de réception. Selon un mode de réalisation on réalise régulièrement cette mesure lors de mise en œuvre du procédé selon l'invention.

La boucle d'itération s'arrête lorsque la localisation temporelle du maximum de l'obstacle d'intérêt, ici le plus proche, ne varie plus, ce qui signifie que cet obstacle a bien été séparé des autres.

Selon un mode de réalisation du processus itératif on applique d'abord un filtre correcteur correspondant à une fonction d'analyse présentant une seule discontinuité A0, puis des fonctions d'analyse présentant une première et une deuxième discontinuités (A1, A2) à deux instants de discontinuité (td1, td2) rapprochés dans le temps, et/ou des fonctions d'analyse présentant trois discontinuités à trois instants de discontinuité rapprochés dans le temps, les discontinuités étant modifiées de manière itérative.

Selon un exemple de mise en œuvre d'un lidar selon l'invention, des simulations ont été réalisées. Des mesures expérimentales ont par ailleurs été réalisées, avec des résultats expérimentaux proches des simulations, ce qui montre la validité du calcul. On recherche ici le distance du l'obstacle le plus proche dans une mise en situation avec 3 obstacles selon une première configuration.

Obstacle 1 : d=0,7 m - amplitude : 1

Obstacle 2 : d=1,7 m - amplitude : 1

Obstacle 3 : d=6 m - amplitude : 5

Les paramètres de la simulation sont les suivants :

Fréquence d'échantillonnage Fe = 400 MHz (un points toutes les 2.5 ns), échantillonnage sur 10 bits

Circuit d'amplification : R = 300 kΩ Bande passante : 2,7 MHz

L'extension temporelle de hr(t) est de 200 ns soit 80 points d'échantillonnages.

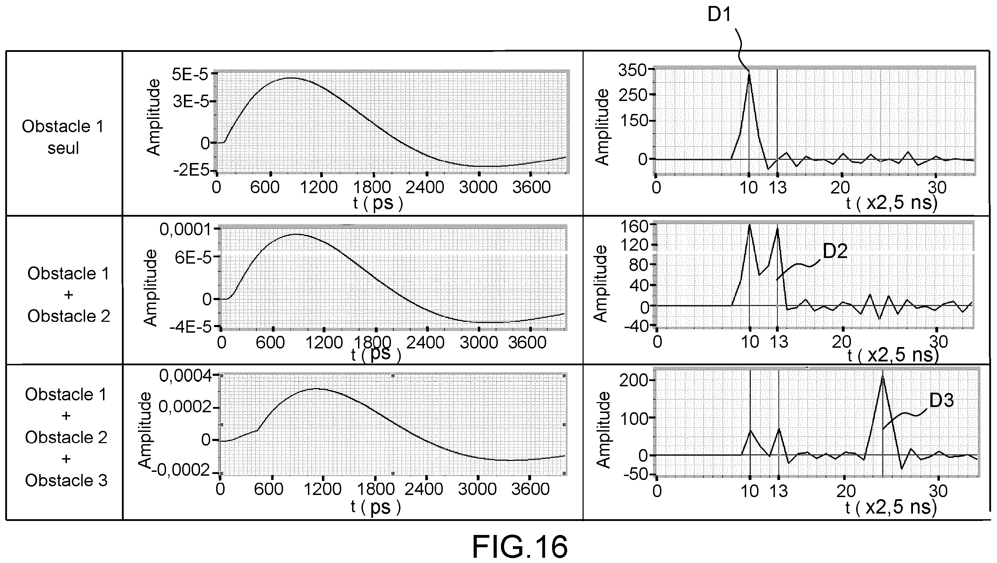

La figure 16 illustre les signaux lidar bruts et traités pour trois situations :
(1) :Obstacle 1 seul, (2) : obstacles 1 et 2, (3) :obstacles 1, 2 et 3 dans la scène.

Les droites D1, D2 et D3 représentent la position exacte des trois obstacles en retard.

Les courbes de gauche illustrent le signal brut $s_0(t)$ en sortie du récepteur, tel qu'illustré figure 5. Les courbes de droite illustrent le signal traité $s_p^e(t)$, avec une abscisse correspondant aux quantums de temps (points d'échantillonnage) soit 2.5 ns (auquel correspond un quantum de distance 2.5/6.67 = 37.5 cm).

La position du premier obstacle est à l'abscisse 10, soit un retard de 25ns. Cela ne correspond pas directement à la position du premier obstacle, car il y a un offset de temps, parfaitement maitrisé, dépendant directement de la position du Dirac de la fonction d'analyse.

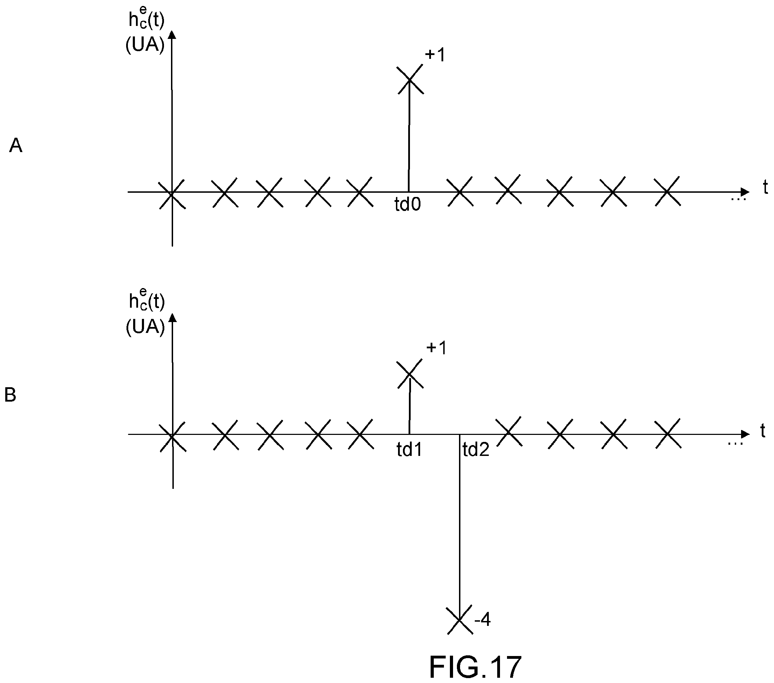

La simulation est réalisée avec une fonction d'analyse hc du premier type simple Dirac illustré figure 17-A: une seule discontinuité, d'amplitude A0=1 pour un point d'échantillonnage à un instant td0 = 20ns, et des valeurs nulles pour les autres instants.

On remarque que dans cette configuration d'obstacles la fonction d'analyse du premier type permet l'identification des 3 obstacles et leur séparation.

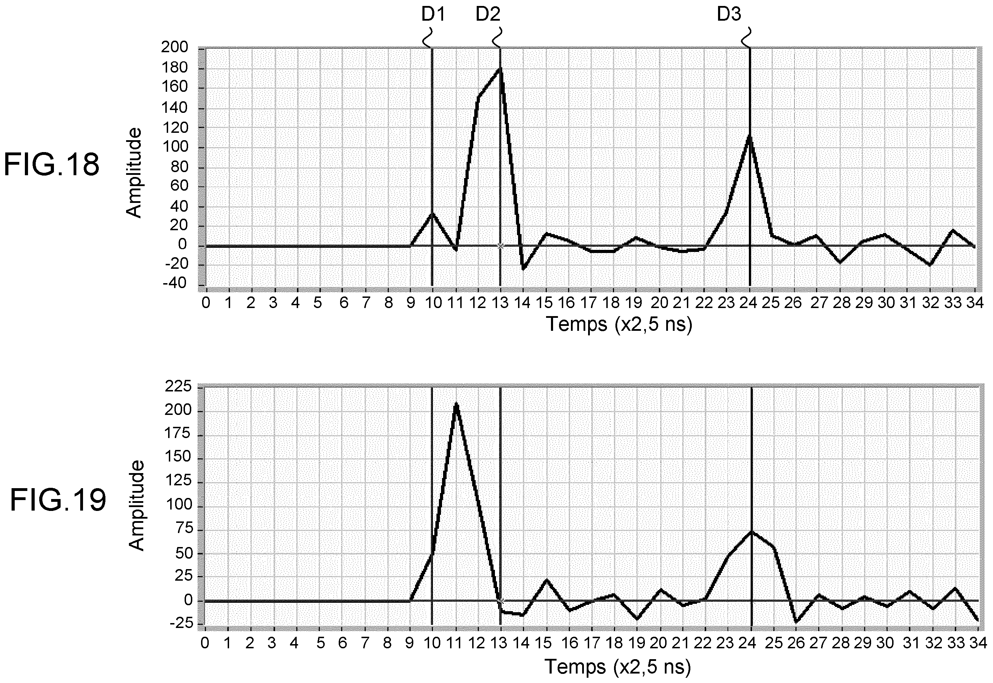

La figure 18 illustre le signal traité avec la même fonction d'analyse que précédemment pour la deuxième configuration d'obstacles suivante :

Obstacle 1 : d=0,7 m - amplitude : 1

Obstacle 2 : d=1,7 m - amplitude : 10

Obstacle 3 : d=6 m - amplitude : 5

L'écho de l'obstacle 2 est ici beaucoup plus important. On note sur la courbe que le pic associé au premier obstacle et toujours visible mais plus faible. Pour des obstacles trop proches et/ou avec un deuxième obstacle puissant, on perçoit la limite de la fonction simple Dirac.

La figure 19 illustre le signal traité avec la même fonction d'analyse que précédemment pour une troisième configuration d'obstacles suivante :

Obstacle 1 : d=0,7 m - amplitude : 1

Obstacle 2 : d=1,2 m - amplitude : 10

Obstacle 3 : d=6 m - amplitude : 5

L'obstacle 2 a été rapproché de l'obstacle 1. On remarque que les deux premiers obstacles ne sont plus discriminés par la fonction d'analyse simple Dirac, et que le signal traité correspond à un obstacle fictif situé entre les deux obstacles réels.

Afin de régler ce problème et identifier avec précision la position de l'obstacle le plus proche, on applique alors une fonction d'analyse double Dirac préférentiellement selon un processus itératif.

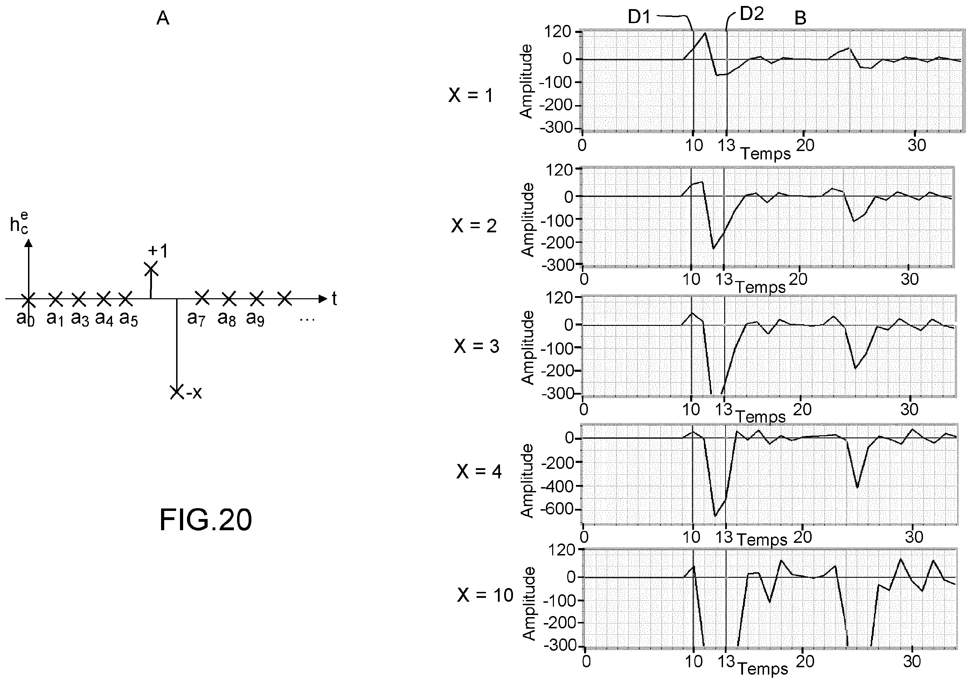

La figure 20 illustre les signaux traités avec la fonction d'analyse double Dirac, illustrée en A, pour la troisième configuration d'obstacles. En B figurent les différents signaux traités obtenus pour différentes valeurs de a6 qui est augmenté de 1 à chaque itération. On constate qu'entre les deux premières itérations X=1 et X=2 et la troisième itération X=3, la positon du premier obstacle n'est pas stabilisée et varie. Il convient de continuer l'itération.

Puis pour les itérations suivantes cette position devient stable ; Une fois la positon du premier obstacle stabilisée on peut arrêter le processus.

A noter que lors de l'application du double Dirac seule la position de premier obstacle doit être pris en compte. Ce qui se passe après (temporellement) ne doit pas être considéré.

Selon une variante le circuit d'amplification CA du lidar 10 selon l'invention présente un composant additionnel.

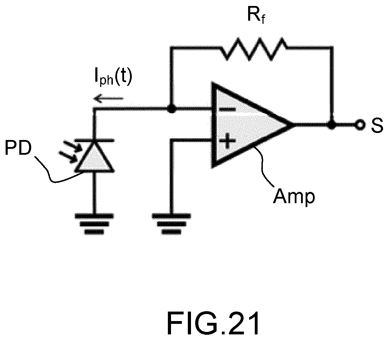

De manière classique le montage récepteur associé à une photodiode PD le plus adapté et le plus usité est appelé amplificateur de transimpédance (« *Trans Impedance Amplifier* » ou TIA. Ses éléments sont connus des professionnels. Dans sa version la plus basique, il est constitué d'une résistance $R_f$ et d'un amplificateur opérationnel Amp tel qu'illustré figure 21.

En considérant les composants idéaux :

- La photodiode PD transforme le flux lumineux en courant de photo génération $I_{ph}$.
- Le TIA transforme le courant $I_{ph}$ en tension suivant la relation $S = -R_f I_{ph}$.
- La valeur de la résistance $R_f$ fixe le gain de l'amplificateur. La sensibilité du TIA est liée à cette valeur.

Une photodiode de type PIN est préférée, plus fiable et plus simple à mettre en œuvre qu'une photodiode à avalanche (APD).

Le courant issu de la photodiode peut être décrit par la relation :

$$i_{ph}(t) = S.\emptyset_e(t) + I_0 + i_{n_{ph}}(t) \quad (9)$$

Dans laquelle :

$S$ est la sensibilité de la photodiode, de l'ordre de 0.6A/W,
$\emptyset_e(t)$ est la puissance lumineuse reçue,
$I_0$ est la somme des courants statiques inverses de la photodiode (courant de saturation, courant de noir),
$i_{n_{ph}}(t)$ représente la somme des bruits intrinsèques de la photodiode (principalement bruit de grenaille).

La puissance lumineuse captée $\emptyset_e(t)$ est constituée d'une partie dynamique $\varphi_e(t)$ telle l'impulsion réfléchie et d'une partie statique causée par un fond lumineux $\emptyset_{e0}$, provoqué par le soleil par exemple (voir également formule (3) et A0). La relation s'écrit alors :

$$i_{ph}(t) = S.(\varphi_e(t) + \emptyset_{e0}) + I_0 + i_{n_{ph}}(t) \quad (10)$$

Une photodiode PIN génère environ 600 mA/W. L'amplificateur transimpédance a un gain qui est en général un compromis entre la bande passante désirée et la sensibilité (capacité de détection) du capteur. Il peut être également limité par l'intensité des courants statiques inverses de la photodiode.

Il convient, en termes de sensibilité de capteur et de rapport signal à bruit de mesure S/N, d'utiliser une résistance $R_f$ élevée conduisant à un gain élevé (et donc à une bande passante faible).

La luminosité ambiante est amplifiée de la même manière que les signaux optiques des échos. Les ordres de grandeurs sont très différents entre les courants générés par les impulsions échos (typiquement quelques $\mu A$ pour un écho de quelques $\mu W$) et celui induit par la luminosité ambiante (typiquement quelques dizaines de mA pour une photodiode silicium de 5×5mm$^2$).

Afin de limiter le courant de photogénération induit par le soleil, pouvant conduire à une saturation du TIA, de manière classique on place un filtre optique juste en surface de photodiode. Il peut être le filtre coloré intégré à la photodiode proposé par les fabricants (spectre large de l'ordre de 300nm), ou encore un filtre interférentiel (spectre étroit de l'ordre de 10nm - présente un inconvénient majeur de directivité).

Cependant malgré la présence d'un filtre une tension en sortie S supérieure à la tension d'alimentation du TIA) (typiquement 5V) est rapidement atteinte avec une résistance Rf élevée et un éclairement ambiant moyen (soleil), ce qui conduit à une saturation du capteur.

Ainsi la tenue du capteur en plein soleil est antagoniste à l'utilisation d'un TIA à forte sensibilité. Un compromis sur le gain est nécessaire :

- L'intérêt d'un gain élevé (résistance de TIA $R_f$ de forte valeur) pour l'obtention d'un S/N élevé nécessaire à la détection d'obstacle renvoyant peu d'écho ;

- La préférence d'un gain faible (résistance de TIA $R_f$ de faible valeur) de manière à privilégier la bande passante importante pour la discrimination d'obstacles ;

- La préférence d'un gain faible (résistance de TIA $R_f$ de faible valeur) pour la tenue du capteur au plein soleil.

Ces points antagonistes montrent la difficulté à réaliser un lidar de proximité à champ large, capable de discriminer des obstacles différents inclus dans le champ de détection et proches, et d'en caractériser les distances, et de maximiser les chances de détection de l'obstacle le plus proche.

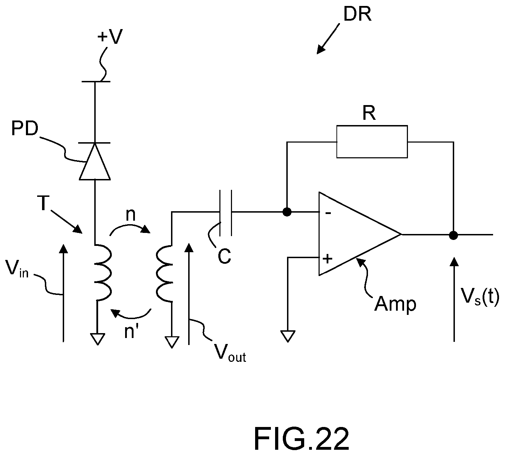

Afin de résoudre le problème de tenue du capteur en plein soleil, le dispositif de réception DR du lidar 10 selon l'invention comprend un transformateur T et une capacité C entre le photodétecteur PD et l'amplificateur TIA, tel qu'illustré figure 22. Le primaire du transformateur est connecté à l'anode du photodétecteur, le secondaire est t connecté à la capacité C, cette capacité étant connectée à une entrée de l'amplificateur transimpédance.

Le transformateur peut être monté en abaisseur (Vout<Vin, Iout>Iin) ou en élévateur (Vout>Vin, Iout<Iin). Préférentiellement le transformateur est monté en abaisseur ce qui permet d'amplifier le courant de photodiode du rapport de transformation sans ajout de bruit complémentaire.

Le principe de fonctionnement du transformateur réside dans la conversion d'un courant en son primaire (ici le courant de photodiode $i_{ph}(t) = S. (\varphi_e(t) + \emptyset_{e0}) + I_0$ ) en un champ magnétique $B(t)$, lui-même reconverti en un champ électrique $E(t)$, donc en une tension $s_t(t)$ (Vout) au secondaire du transformateur.

Il est connu que le champ électrique est fonction de la dérivée du champ magnétique induit par $i_{ph}(t)$. En conséquence la tension et le courant issus du transformateur ne dépendent que des variations de $i_{ph}(t)$. La tension issue du TIA sera de la forme :

$$V_s(t) = k.\frac{d}{dt}\varphi_e(t) \quad (11)$$

Sans caractériser le coefficient $k$, il est établi ici que toutes les composantes statiques du courant de photodiode $i_{ph}(t)$ sont éliminées au secondaire du transformateur :

- Les courants intrinsèques inverses parasites de la photodiode (courant de saturation, courant de noir)

- Les courants de photo génération dus à des sources lumineuses quelconque, faibles ou intenses (soleil).

La capacité C placée entre le TIA et le transformateur a pour rôle de minimiser le gain qu'aurait le système sans cette capacité. En effet, cet ensemble se comporterait en amplificateur non inverseur de gain infini vis-à-vis de la tension d'offset de l'AOP, avec pour effet sa saturation.

La structure du dispositif de réception DR selon l'invention résout donc deux problèmes :

- Levée de la limite de résistance de gain, car les divers courants parasitent continus sont filtrés. On réalise un capteur de très fort gain et on améliore la capacité de détection :

- Le capteur est quasi insensible à l'éclairement ambiant. Il est possible alors de détecter des obstacles avec le soleil de face.

Cette structure est parfaitement adaptée à l'utilisation d'un lidar large *F.O. V* en extérieur.

**Revendications**

1. Méthode de traitement (100) d'un signal issu d'un lidar, ledit lidar réalisant une mesure d'un temps de vol et comprenant un dispositif d'émission configuré pour émettre des impulsions lumineuses en direction d'une scène selon un angle supérieur ou égal à 5° et un dispositif de réception, ledit dispositif de réception présentant une réponse impulsionnelle (hr(t)) et comprenant un photo-détecteur configuré pour recevoir des impulsions réfléchies ou rétrodiffusée par au moins un élément (Ei) de la scène et pour convertir lesdites impulsions en signal électrique, et un circuit d'amplification (CA) configuré pour générer un signal électrique amplifié ($s_0(t)$),
la méthode comprenant les étapes consistant à :

   ◦ A : numériser ledit signal électrique amplifié ( $s_0^e(t)$ )
   ◦ B : appliquer au moins une fonction temporelle de correction, dénommée filtre correcteur ($C^e(t)$), audit signal électrique amplifié numérisé, de manière à générer un signal traité (sf(t)) ; l'application du filtre correcteur consistant en une convolution du signal électrique amplifié numérisé avec ladite fonction temporelle de correction,

ledit filtre correcteur (C$^e$(t)) étant déterminé à partir de ladite réponse impulsionnelle et d'une fonction d'analyse temporelle prédéterminée, ladite fonction d'analyse présentant au moins une valeur non nulle (a0, a1, a2), dénommée discontinuité, à un instant donné dénommé instant de discontinuité (td0, td1, td2), avec un retour vers des valeurs sensiblement nulles autour de ladite discontinuité ; ledit filtre correcteur est déterminé par déconvolution de ladite réponse impulsionnelle par ladite fonction d'analyse prédéterminée,

∘ C : déterminer une distance (di) dudit au moins un élément (Ei) à partir dudit signal traité.

2. Méthode de traitement selon l'une des revendications précédentes dans laquelle une présence dudit au moins un élément dans ladite scène correspond à un maximum local dudit signal traité, et ladite distance associée est déterminée à partir d'une localisation temporelle dudit maximum local.

3. Méthode de traitement selon l'une des revendications précédentes dans laquelle ladite réponse impulsionnelle présente un maximum à un instant t$_{m-imp}$, et dans laquelle ledit au moins un instant de discontinuité de la fonction d'analyse coïncide temporellement avec ledit instant t$_{m-imp}$.

4. Méthode selon l'une des revendications précédentes dans laquelle la fonction d'analyse présente des valeurs nulles en dehors de ladite au moins une discontinuité.

5. Méthode selon l'une des revendications précédentes dans laquelle la fonction d'analyse présente soit une seule discontinuité (A0), soit deux discontinuités, soit trois discontinuités, localisées respectivement à des instants de discontinuité rapprochés dans le temps, c'est-à-dire séparés de quelques points d'échantillonnage.

6. Méthode de traitement selon l'une des revendications précédentes, dans laquelle on applique une pluralité de filtres correcteurs (Cj(t)) déterminés à partir d'une pluralité de fonctions d'analyse (hcj(t)), de manière à générer une pluralité de signaux traités associés (sfj(t)), ladite distance dudit au moins un élément de la scène étant déterminée à partir de ladite pluralité de signaux traités.

7. Méthode de traitement selon la revendication précédente dans laquelle ladite pluralité de filtres correcteurs est appliquée via un processus itératif, jusqu'à ce qu'un signal traité final permette la détermination d'une distance correspondant à l'obstacle le plus proche ; le processus itératif consistant à modifier des discontinuités, c'est à dire des valeurs non nulles desdites fonctions d'analyse.

8. Méthode de traitement selon la revendication précédente dans laquelle on applique d'abord un filtre correcteur correspondant à une fonction d'analyse présentant une seule discontinuité (A0), puis des fonctions d'analyse présentant deux discontinuités ou trois discontinuités, lesdites discontinuités étant modifiées de manière itérative.

9. Système lidar (10) par mesure d'un temps de vol comprenant :

- un dispositif d'émission (DE) configuré pour émettre des impulsions lumineuses en direction d'une scène selon un angle supérieur ou égal à 5 °
- un dispositif de réception (DR) présentant une réponse impulsionnelle (hr(t)) et comprenant :

∘ un photo-détecteur (PD) configuré pour recevoir des impulsions réfléchies (Ir) ou rétrodiffusée par au moins un élément (Ei) de la scène et pour convertir lesdites impulsions en signal électrique,
∘ un circuit d'amplification (CA) configuré pour amplifier ledit signal électrique,

- une unité de traitement (UT) dudit signal électrique amplifié configurée pour :

∘ numériser ledit signal électrique amplifié ($s_0^e(t)$)
∘ appliquer au moins une fonction temporelle de correction, dénommée filtre correcteur (C$^e$(t)), audit signal électrique amplifié numérisé, de manière à générer un signal traité (sf(t)) ; l'application du filtre correcteur consistant en une convolution du signal électrique amplifié numérisé avec ladite fonction temporelle de correction,

ledit filtre correcteur (C$^e$(t)) étant déterminé à partir de ladite réponse impulsionnelle (hr(t)) et d'une fonction d'analyse temporelle prédéterminée, ladite fonction d'analyse présentant au moins une valeur non nulle (a0, a1, a2), dénommée discontinuité, à un instant donné dénommé instant de discontinuité (td0, td1, td2), avec un retour vers des valeurs sensiblement nulles autour de ladite discontinuité ; ledit filtre correcteur est déterminé par déconvolution de ladite réponse impulsionnelle par ladite fonction d'analyse prédéterminée,
  ◦ déterminer une distance (di) dudit au moins un élément (Ei) à partir dudit signal traité.

10. Système lidar selon la revendication précédente dans lequel le circuit d'amplification (CA) comprend un amplificateur transimpédance (TIA), un transformateur comprenant un primaire et un secondaire, et une capacité (C), le primaire du transformateur étant connecté à une anode du photo-détecteur, le secondaire étant connecté à une capacité, ladite capacité étant connectée à une entrée dudit amplificateur transimpédance.

## Patentansprüche

1. Verfahren zum Verarbeiten (100) eines von einem Lidar stammenden Signals, wobei das Lidar eine Laufzeitmessung durchführt und eine Sendevorrichtung, die zum Senden von Lichtimpulsen in Richtung einer Szene unter einem Winkel von größer als oder gleich 5° konfiguriert ist, und eine Aufnahmevorrichtung umfasst, wobei die Aufnahmevorrichtung eine Impulsantwort (hr(t)) aufweist und einen Photodetektor, der zum Empfangen von Impulsen, die durch mindestens ein Element (Ei) der Szene reflektiert oder rückgestreut werden, und zum Umwandeln der Impulse in ein elektrisches Signal konfiguriert ist, und eine Verstärkungsschaltung (CA) umfasst, die zum Erzeugen eines verstärkten elektrischen Signals ($s_0(t)$) konfiguriert ist,
das Verfahren umfassend die Schritte, bestehend aus:

  ◦ A: Digitalisieren des verstärkten elektrischen Signals ( $s_0^e(t)$ )
  ◦ B: Anwenden mindestens einer zeitlichen Korrekturfunktion, genannt Korrekturfilter ($C^e(t)$), auf das verstärkte digitalisierte elektrische Signal, um ein verarbeitetes Signal (sf(t)) zu erzeugen; wobei das Anwenden des Korrekturfilters aus einer Faltung des verstärkten digitalisierten elektrischen Signals mit der zeitlichen Korrekturfunktion besteht,
  wobei das Korrekturfilter ($C^e(t)$) aus der Impulsantwort und einer vorbestimmten zeitlichen Analysefunktion bestimmt wird, wobei die Analysefunktion mindestens einen von null verschiedenen Wert (a0, a1, a2), genannt Diskontinuität, zu einem gegebenen Zeitpunkt, genannt Diskontinuitätszeitpunkt (td0, td1, td2), mit einer Rückkehr zu im Wesentlichen null Werten um die Diskontinuität herum aufweist; wobei das Korrekturfilter durch Dekonvolution der Impulsantwort durch die vorbestimmte Analysefunktion bestimmt wird,
  ◦ C: Bestimmen einer Entfernung (di) des mindestens einen Elements (Ei) aus dem verarbeiteten Signal.

2. Verfahren nach einem der vorstehenden Ansprüche, wobei ein Vorhandensein des mindestens einen Elements in der Szene einem lokalen Maximum des verarbeiteten Signals entspricht, und die zugeordnete Entfernung aus einer zeitlichen Lokalisierung des lokalen Maximums bestimmt wird.

3. Verarbeitungsverfahren nach einem der vorstehenden Ansprüche, wobei die Impulsantwort ein Maximum zu einem Zeitpunkt $t_{m-imp}$ aufweist, und wobei der mindestens eine Diskontinuitätszeitpunkt der Analysefunktion zeitlich mit dem Zeitpunkt $t_{m-imp}$ zusammenfällt.

4. Verfahren nach einem der vorstehenden Ansprüche, wobei die Analysefunktion außerhalb der mindestens einen Diskontinuität Nullwerte aufweist.

5. Verfahren nach einem der vorstehenden Ansprüche, wobei die Analysefunktion entweder eine einzige Diskontinuität (A0) oder zwei Diskontinuitäten oder drei Diskontinuitäten aufweist, die jeweils zu zeitlich nahe beieinanderliegenden Diskontinuitätszeitpunkten lokalisiert sind, das heißt durch wenige Abtastpunkte getrennt sind.

6. Verfahren nach einem der vorstehenden Ansprüche, wobei eine Vielzahl von Korrekturfiltern (Cj(t)), die aus einer Vielzahl von Analysefunktionen (hcj(t)) bestimmt werden, angewendet wird, um eine Vielzahl von zugeordneten verarbeiteten Signalen (sfj(t)) zu erzeugen, wobei die Entfernung des mindestens einen Elements der Szene aus der Vielzahl von verarbeiteten Signalen bestimmt wird.

7. Verfahren nach dem vorstehenden Anspruch, wobei die Vielzahl von Korrekturfiltern über einen iterativen Prozess angewendet wird, bis ein endgültiges verarbeitetes Signal die Bestimmung einer Entfernung ermöglicht, die dem nächstgelegenen Hindernis entspricht; wobei der iterative Prozess darin besteht, Diskontinuitäten zu modifizieren, das heißt von null verschiedene Werte der Analysefunktionen.

**8.** Verfahren nach dem vorstehenden Anspruch, wobei zunächst ein Korrekturfilter angewendet wird, der einer Analysefunktion mit einer einzigen Diskontinuität (A0) entspricht, dann Analysefunktionen mit zwei Diskontinuitäten oder drei Diskontinuitäten, wobei die Diskontinuitäten iterativ modifiziert werden.

**9.** Lidar-System (10) zur Laufzeitmessung, umfassend:

- eine Sendevorrichtung (DE), die zum Senden von Lichtimpulsen in Richtung einer Szene unter einem Winkel von größer als oder gleich 5° konfiguriert ist
- eine Aufnahmevorrichtung (DR), die eine Impulsantwort (hr(t)) aufweist und umfasst:

◦ einen Photodetektor (PD), der zum Empfangen von Impulsen, die durch mindestens ein Element (Ei) der Szene reflektiert (Ir) oder rückgestreut werden, und zum Umwandeln der Impulse in ein elektrisches Signal konfiguriert ist,
◦ eine Verstärkungsschaltung (CA), die zum Verstärken des elektrischen Signals konfiguriert ist,

- eine Verarbeitungseinheit (UT) für das verstärkte elektrische Signal, die konfiguriert ist zum:

◦ Digitalisieren des verstärkten elektrischen Signals ( $s_0^e(t)$ )
◦ Anwenden mindestens einer zeitlichen Korrekturfunktion, genannt Korrekturfilter (C$^e$(t)), auf das verstärkte digitalisierte elektrische Signal, um ein verarbeitetes Signal (sf(t)) zu erzeugen; wobei das Anwenden des Korrekturfilters aus einer Faltung des verstärkten digitalisierten elektrischen Signals mit der zeitlichen Korrekturfunktion besteht,
wobei das Korrekturfilter (C$^e$(t)) aus der Impulsantwort (hr(t)) und einer vorbestimmten zeitlichen Analysefunktion bestimmt wird, wobei die Analysefunktion mindestens einen von null verschiedenen Wert (a0, a1, a2), genannt Diskontinuität, zu einem gegebenen Zeitpunkt, genannt Diskontinuitätszeitpunkt (td0, td1, td2), mit einer Rückkehr zu im Wesentlichen null Werten um die Diskontinuität herum aufweist; wobei das Korrekturfilter durch Dekonvolution der Impulsantwort durch die vorbestimmte Analysefunktion bestimmt wird,
◦ Bestimmen einer Entfernung (di) des mindestens einen Elements (Ei) aus dem verarbeiteten Signal.

**10.** Lidar-System nach dem vorstehenden Anspruch, wobei die Verstärkerschaltung (CA) einen Transimpedanzverstärker (TIA), einen Transformator, umfassend eine Primärwicklung und eine Sekundärwicklung, und einen Kondensator (C) umfasst, wobei die Primärwicklung des Transformators mit einer Anode des Photodetektors verbunden ist, die Sekundärwicklung mit einem Kondensator verbunden ist, wobei der Kondensator mit einem Eingang des Transimpedanzverstärkers verbunden ist.

**Claims**

**1.** A method (100) for processing a signal from a lidar, said lidar performing a time-of-flight measurement and comprising an emitting device configured to emit light pulses in the direction of a scene at an angle greater than or equal to 5° and a receiving device, said receiving device exhibiting an impulse response (hr(t)) and comprising a photodetector configured to receive pulses reflected or backscattered by at least one element (Ei) of the scene and to convert said pulses into an electrical signal, and an amplification circuit (CA) configured to generate an amplified electrical signal ($s_0$(t)),
the method comprising the steps of:

◦ A: digitizing the amplified electrical signal ( $s_0^e(t)$ )
◦ B: applying at least one time correction function, referred to as the correcting filter (C$^e$(t)), to the digitizing amplified electrical signal in order to generate a processed signal (sf(t)); applying the correcting filter consists in convolving the digitized amplified electrical signal with said correction time function,
the correcting filter (C$^e$(t)) being determined based on the impulse response and a predetermined time analysis function, the analysis function having at least one non-zero value (a0, a1, a2), referred to as the discontinuity, at a given time referred to as the discontinuity time (td0, td1, td2), with a return to substantially zero values around the discontinuity; said correcting filter is determined by deconvolution of said impulse response by said predetermined analysis function,
◦ C: determining a distance (di) of said at least one element (Ei) based on the processed signal.

2.  The processing method according to any one of the preceding claims, wherein a presence of said at least one element in said scene corresponds to a local maximum of said processed signal, and said associated distance is determined from a temporal location of said local maximum.

3.  The processing method according to one of the preceding claims, wherein said impulse response has a maximum at a time $t_{m-imp}$, and wherein said at least one discontinuity time of the analysis function temporally coincides with said time $t_{m-imp}$.

4.  The method according to one of the preceding claims, wherein the analysis function has zero values outside said at least one discontinuity.

5.  The method according to one of the preceding claims wherein the analysis function has either a single discontinuity (A0), or two discontinuities, or three discontinuities, located respectively at discontinuity times close together in time, i.e. separated by a few sampling points.

6.  The processing method according to one of the preceding claims, wherein a plurality of correcting filters (Cj(t)) determined from a plurality of analysis functions (hcj(t)) are applied, so as to generate a plurality of associated processed signals (sfj(t)), said distance of said at least one element in the scene being determined from said plurality of processed signals.

7.  The processing method according to the preceding claim, wherein said plurality of correcting filters is applied via an iterative process, until a final processed signal allows the determination of a distance corresponding to the nearest obstacle; the iterative process consisting in modifying discontinuities, that is non-zero values of said analysis functions.

8.  The processing method according to the preceding claim, wherein a correcting filter corresponding to an analysis function with a single discontinuity (A0) is first applied, followed by analysis functions with two discontinuities or three discontinuities, said discontinuities being iteratively modified.

9.  A time-of-flight lidar system (10) comprising:

    - an emitting device (DE) configured to emit light pulses towards a scene at an angle greater than or equal to 5°
    - a receiving device (DR) having an impulse response (hr(t)) and comprising:

        ∘ a photodetector (PD) configured to receive pulses (Ir) reflected or backscattered by at least one element (Ei) in the scene, and to convert said pulses into an electrical signal,
        ∘ an amplification circuit (CA) configured to amplify said electrical signal,

    - a processing unit (UT) of said amplified electrical signal configured to:

        ∘ digitize the amplified electrical signal ( $\tilde{s}_0^e(t)$ )
        ∘ apply at least one time correction function, referred to as the correcting filter (Ce(t)), to the digitizing amplified electrical signal in order to generate a processed signal (sf(t)); applying the correcting filter consisting in convolving the digitized amplified electrical signal with said temporal correction function, the correcting filter (Ce(t)) being determined based on the impulse response (hr(t)) and a predetermined time analysis function, the analysis function having at least one non-zero value (a0, a1, a2), referred to as the discontinuity, at a given time referred to as the discontinuity time (td0, td1, td2), with a return to substantially zero values around the discontinuity; said correcting filter is determined by deconvolution of said impulse response by said predetermined analysis function,
        ∘ determine a distance (di) of the at least one element (Ei) based on the processed signal.

10. The lidar system according to the preceding claim, wherein the amplification circuit (CA) comprises a transimpedance amplifier (TIA), a transformer comprising a primary and a secondary, and a capacitor (C), the primary of the transformer being connected to an anode of the photodetector, the secondary being connected to a capacitor, said capacitor being connected to an input of said transimpedance amplifier.

FIG.1A

EP 4 453 605 B1

D

2

**FIG.1B**

D

10

**FIG.1C**

FIG.2

FIG.3

FIG.4

FIG.5

$I_r$

$t$

$h_r(t)$ — DR

$S_0(t)$

100

Numériser $S_0(t)$ — A

$S_0^e(t)$

Appliquer $C(t)$ — B

$S_p^e(t)$

Déterminer $d_i$ — C

# FIG.6

$S_0^e(t)$

70

$$S_0(t) = I_r(t) * h_r(t)$$

$$S_p^e(t) = S_0^e(t) * C^e(t)$$

$d_i$

## FIG.7

Récepteur $h_r(t)$

Correcteur $C(t)$

$$h_c(t) = (h_r * C)(t)$$

## FIG.8

FIG.9

EP 4 453 605 B1

FIG.10

FIG.11

EP 4 453 605 B1

FIG.12

A

B

FIG.13

A

B

FIG.14

FIG.15

FIG.16

FIG.17

FIG.18

FIG.19

FIG.20

EP 4 453 605 B1

FIG.21

DR

R

Amp

$V_s(t)$

C

$V_{out}$

+V

PD

T

$V_{in}$

n

n'

FIG.22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013088726 A1

- WO 2013120041 A1

**Littérature non-brevet citée dans la description**

- Empirical comparison of full-waveform lidar algorithms: Range extraction and discrimination performance. *PHOTOGRAMMETRIC ENGINEERING AND REMOTE SENSING*, 01 August 2011, vol. 77 (8), 825-838